# EUROPEAN PATENT APPLICATION

(11) **EP 4 834 709 A1**
(43) Date of publication of application: **04.11.2026**
(21) Application number: 26175413.9
(22) Date of filing: 29.04.2026
(51) Int. Cl.: B62B 9/14, A47D 13/02

(54) **CANOPY MECHANISM**

(30) Priority: 30.04.2025 CN 202510578263; 29.05.2025 CN 202510712615
(71) Applicant: Wonderland Switzerland AG, 6312 Steinhausen (CH)
(72) Inventor: LI, Ruyi, Qingxi Town, Dongguan, Guangdong, 523648 (CN); MO, Xiaolong, Qingxi Town, Dongguan, Guangdong, 523648 (CN); ZHANG, Kun, Qingxi Town, Dongguan, Guangdong, 523648 (CN); NING, Huan, Qingxi Town, Dongguan, Guangdong, 523648 (CN)
(74) Representative: Müller-Boré & Partner Patentanwälte PartG mbB

(57) **Abstract**

A canopy mechanism for a carrier, including: a first portion provided with a first connection portion; and a second portion separably connected with the first connection portion. When the first connection portion is connected to the second portion, the canopy mechanism is capable of pivoting around a first pivot axis between an unfolded state and a folded state. When the canopy mechanism is in the unfolded state, the first portion and the second portion are respectively in a first closed state and a second closed state. When the first portion and the second portion are respectively in the first closed state and the second closed state, and at least a portion of the first connection portion is separated from the second portion, the first portion may be switched from the first closed state to a first open state, so as to form a first opening on the canopy mechanism. The first portion and the second portion are disposed opposite to each other in a direction parallel to the first pivot axis.

## Description

### TECHNICAL FIELD

This application relates to the technical field of carrier accessories, and particularly relates to a carrier canopy mechanism.

### BACKGROUND

Carriers such as strollers, carrycots and child safety seats are typically equipped with canopy mechanisms to protect objects, children, pets or the like in the carriers. The so-called protection herein includes, for example, shading from the sun and sheltering from wind and rain, etc. Generally, the canopy mechanisms are designed to be switchable between an unfolded state and a folded state. However, the existing canopy mechanisms may only be switched between the unfolded state and the folded state as a whole. In some usage scenarios, for example, for a carrier used for carrying a child, the canopy mechanism cannot achieve the function of both protecting the child and providing a space to enable a caregiver located on a side of the canopy mechanism to interact with the child. For example, when the canopy mechanism is in the unfolded state, the canopy mechanism can only protect the child, but cannot provide a space for the caregiver located on the side of the canopy mechanism to interact with the child; or when the canopy mechanism is in the folded state, the canopy mechanism only provides the space for the caregiver located on the side of the canopy mechanism to interact with the child, but cannot protect the child. As another example, for a carrier used for accommodating an object, the canopy mechanism cannot achieve the function of both protecting the object and providing a space for a user located on the side of the canopy mechanism to pick up the object. For example, when the canopy mechanism is in the unfolded state, the canopy mechanism can only protect the object, but cannot provide a space for the user located on the side of the canopy mechanism to pick up the object; or when the canopy mechanism is in the folded state, the canopy mechanism only provides the space for the user located on the side of the canopy mechanism to pick up the object, but cannot protect the object.

### SUMMARY

Based on this, in view of the above technical problems, it is necessary to provide a canopy mechanism capable of being partially unfolded and folded, so as to achieve the function of both protecting a child and providing a space to enable a caregiver located on one side of the canopy mechanism to interact with the child, or achieve the function of both protecting an object and providing a space for a user located on the side of the canopy mechanism to pick up the object.

One aspect of the present application provides a canopy mechanism for a carrier. The canopy mechanism includes: a first portion provided with a first connection portion; and a second portion separably connected with the first connection portion. When the first connection portion is connected to the second portion, the canopy mechanism is capable of pivoting around a first pivot axis between an unfolded state and a folded state. When the canopy mechanism is in the unfolded state, the first portion and the second portion are respectively in a first closed state and a second closed state. When the first portion and the second portion are respectively in the first closed state and the second closed state, and at least a portion of the first connection portion is separated from the second portion, the first portion may be switched from the first closed state to a first open state, so as to form a first opening on the canopy mechanism. The first portion and the second portion are disposed opposite to each other in a direction parallel to the first pivot axis.

In an embodiment, the first portion includes: a first pivoting member configured to pivot around the first pivot axis between a first closed position and a first open position; a first fixed portion connected to a carrier body of the carrier; and a first cover extends between the first fixed portion and the first pivoting member. The first connection portion is disposed on the first cover. When the first pivoting member is at the first closed position, the first cover is unfolded between the first fixed portion and the first pivoting member, and the first portion is in the first closed state. When the first pivoting member is at the first open position, the first cover is folded between the first fixed portion and the first pivoting member, and the first portion is in the first open state.

In an embodiment, the second portion is provided with a second connection portion, and the second portion includes: a second pivoting member configured to pivot around the first pivot axis between a second closed position and a second open position; a second fixed portion connected to the carrier body of the carrier; and a second cover extends between the second fixed portion and the second pivoting member. The second connection portion is disposed on the second cover, and the second connection portion is separably connected with the first connection portion. When the second pivoting member is at the second closed position, the second cover is unfolded between the second fixed portion and the second pivoting member, and the second portion is in the second closed state.

In an embodiment, when the first portion and the second portion are respectively in the first closed state and the second closed state, and the first connection portion is separated from the second connection portion, the second portion may be switched from the second closed state to a second open state, so as to form a second opening on the canopy mechanism. When the second pivoting member is at the second open position, the second cover is folded between the second fixed portion and the second pivoting member, and the second portion is in the second open state.

In an embodiment, the first pivoting member is disposed at a first end of the first cover in a penetration manner, a second end of the first cover is connected to the first fixed portion, and the first connection portion is disposed on an edge of the first cover that is located between the first end of the first cover and the second end of the first cover.

In an embodiment, the second pivoting member is disposed at a first end of the second cover in the penetration manner, a second end of the second cover is connected to the second fixed portion, and the second connection portion is disposed on an edge of the second cover that is located between the first end of the second cover and the second end of the second cover.

In an embodiment, an extension direction of the first connection portion intersects with an extension direction of the first pivoting member, and an extension direction of the second connection portion intersects with an extension direction of the second pivoting member.

In an embodiment, an end portion of the first pivoting member is provided with a first bent portion, and the first bent portion has a portion extending along the extension direction of the first connection portion; and/or, an end portion of the second pivoting member is provided with a second bent portion, and the second bent portion has a portion extending along the extension direction of the second connection portion.

In an embodiment, the first portion further includes at least one first supporting member. When the first portion is in the first closed state, in a direction around the first pivot axis, the first supporting member is located between the first pivoting member and the first fixed portion, and the first supporting member supports the first cover.

In an embodiment, the second portion further includes at least one second supporting member. When the second portion is in the second closed state, in the direction around the first pivot axis, the second supporting member is located between the second pivoting member and the second fixed portion, and the second supporting member supports the second cover.

In an embodiment, the first pivoting member and the second pivoting member are configured to be strip-shaped, rod-shaped, tubular-shaped or plate-shaped.

In an embodiment, when the first pivoting member and the second pivoting member are configured to be plate-shaped, the first pivoting member and/or the second pivoting member is provided with a through hole.

In an embodiment, the canopy mechanism further includes a pivoting joint. The pivoting joint includes: a positioning member including an engagement portion and a first pivoting portion connected with each other, the engagement portion being connected to the carrier body of the carrier; and a rotating member including a rotating portion and a mounting portion, the rotating portion being pivotably connected to the first pivoting portion, so that the rotating member is pivotable around the first pivot axis, and the mounting portion is connected to the first pivoting member.

In an embodiment, the mounting portion is provided with a mounting opening, a mounting cavity is disposed in the mounting portion, the mounting opening is in communication with the mounting cavity, the first pivoting member is provided with a plug-in connection portion, and the plug-in connection portion is inserted into the mounting cavity via the mounting opening to be connected to the mounting portion.

In an embodiment, the mounting portion is provided with a first wall and a second wall opposite to each other, the first wall is provided with an operation opening, the second wall is provided with an elastic arm, the elastic arm is provided with an operation protrusion, the operation protrusion extends towards the first wall and protrudes from the operation opening, the elastic arm is further provided with a mounting protrusion, the mounting protrusion extends towards the first wall, the mounting protrusion is disposed farther from a free end of the elastic arm compared to the operation protrusion, the plug-in connection portion is provided with a mounting hole, and when the plug-in connection portion is inserted into the mounting cavity, the mounting protrusion enters the mounting hole.

In an embodiment, the positioning member further includes an extension portion, the extension portion is connected to the engagement portion, the extension portion is provided with a second pivoting portion. The first portion further includes a first supporting member. When the first portion is in the first closed state, in the direction around the first pivot axis, the first supporting member is located between the first pivoting member and the first fixed portion, and the first supporting member supports the first cover. An end portion of the first supporting member is pivotably connected to the second pivoting portion, the first supporting member is configured to be pivotable about a second pivot axis, and the second pivot axis is parallel to the first pivot axis.

In an embodiment, at least a portion of the first cover is made of a transparent material, and/or at least a portion of the second cover is made of a transparent material.

In an embodiment, when the canopy mechanism is pivoted to the unfolded state, projections of the first portion and the second portion on a reference plane are axisymmetric or centrosymmetric.

In an embodiment, the first portion includes a first cover, the first cover is provided with a first connection edge and a first separable edge, the first connection edge is connected to the second portion, and the first connection portion is disposed on the first separable edge to be separably connected to the second portion. When the first portion and the second portion are respectively in the first closed state and the second closed state, and at least a portion of the first connection portion is separated from the second portion, the first cover may be switched from a first cover state to a first exposure state, so as to form a first opening on the canopy mechanism, so that the first portion is switched from the first closed state to the first open state.

In an embodiment, the second portion is provided with a second connection portion, and the second portion includes: a second pivoting member configured to pivot around the first pivot axis between a second closed position and a second open position; a second fixed portion connected to the carrier body of the carrier; and a second cover, a first end of the second cover being connected to the second pivoting member, a second end of the second cover being connected to the second fixed portion, at least a portion of the second connection portion is disposed on the second cover, and the second connection portion is separably connected with the first connection portion. When the canopy mechanism is in the unfolded state, the second pivoting member is at the second closed position, an opening is formed on a side of the second pivoting member that faces a front end of the carrier body of the carrier, and the second cover is unfolded between the second fixed portion and the second pivoting member. When the canopy mechanism is in the folded state, the second pivoting member is at the second open position, and the second cover is folded between the second fixed portion and the second pivoting member.

In an embodiment, the first connection portion includes a first connection section and a second connection section, the first connection section extends along a first extension direction, and the second connection section extends along a second extension direction intersecting with the first extension direction. The second connection portion includes a third connection section and a fourth connection section, the first connection section is separably connected to the third connection section, and the second connection section is separably connected to the fourth connection section. When the first portion and the second portion are respectively in the first closed state and the second closed state, the first connection section is separated from the third connection section, the second connection section is separated from the fourth connection section, and the first cover may be switched from the first cover state to the first exposure state.

In an embodiment, the third connection section is disposed on the edge of the second cover that is located between the first end of the second cover and the second end of the second cover, and the fourth connection section is disposed on the second pivoting member.

In an embodiment, the second connection section is slidably connected to the fourth connection section.

In an embodiment, the third connection section and the fourth connection section are disposed on the second cover.

In an embodiment, the second cover includes: a main body and a movable portion, the movable portion is provided with a second connection edge and a second separable edge, the second connection edge is connected to the main body, and the second separable edge is separably connected with the main body. When the second portion is in the second closed state and the second separable edge is separated from the main body, the movable portion is capable of moving from a second cover state to a second exposure state, so as to form a second opening on the canopy mechanism, so that the second portion is switched from the second closed state to the second open state.

In an embodiment, the canopy mechanism further includes a third cover, a first end of the third cover is connected to the second portion, and a second end of the third cover is detachably connected to the front end of the carrier body of the carrier. When the canopy mechanism is in the unfolded state and the second end of the third cover is connected to the front end of the carrier body of the carrier, the third cover is unfolded and at least partially covers the opening.

In an embodiment, the second end of the third cover is detachably connected to the front end of the carrier body of the carrier. When the canopy mechanism is in the unfolded state and the second end of the third cover is connected to the front end of the carrier body of the carrier, a front opening is formed between the second end of the third cover and the front end of the carrier body of the carrier.

In an embodiment, when the canopy mechanism is in the unfolded state, and the second end of the third cover is connected to the front end of the carrier body of the carrier, a side opening is formed among at least one edge of the third cover that is located between the first end of the third cover and the second end of the third cover, a portion of the second pivoting member and a portion of a side edge of the carrier body of the carrier.

In an embodiment, the third cover is further provided with a top opening. When the canopy mechanism is in the unfolded state, and the second end of the third cover is connected to the front end of the carrier body of the carrier, the top opening is located above the second pivoting member, and the second pivoting member is exposed from the top opening.

In an embodiment, the second cover is provided with a storage bag, the storage bag is provided with a storage opening, and the third cover may be stored in the storage bag through the storage opening after being folded.

In an embodiment, the second cover is provided with a covering member, and the covering member is capable of moving between a covering location for covering the storage opening and an exposure location for allowing the storage opening to be exposed.

In an embodiment, the first end of the second cover is provided with a connection band, and the connection band is detachably connected to the second pivoting member.

In an embodiment, an avoidance opening is formed between a portion of the edge of the first end of the second cover and the second pivoting member.

In an embodiment, the canopy mechanism further includes a third cover, a first end of the third cover is connected to the second portion, and a second end of the third cover is detachably connected to the front end of the carrier body of the carrier. When the canopy mechanism is in the unfolded state and the second end of the third cover is connected to the front end of the carrier body of the carrier, the third cover is unfolded and at least partially covers the opening, the third cover is further provided with a top opening, the top opening is located above the second pivoting member, the second pivoting member is exposed from the top opening, and the top opening at least partially overlaps with the avoidance opening.

In an embodiment, the second portion further includes at least one second supporting member. When the second portion is in the second closed state, in the direction around the first pivot axis, the second supporting member is located between the second pivot member and the second fixed portion.

In an embodiment, the second pivoting member is a carrying handle.

Another aspect of the present application provides a carrier, including: a canopy mechanism and a carrier body. The canopy mechanism includes: a first portion provided with a first connection portion; and a second portion separably connected with the first connection portion. When the first connection portion is connected to the second portion, the canopy mechanism is capable of pivoting around a first pivot axis between an unfolded state and a folded state. When the canopy mechanism is in the unfolded state, the first portion and the second portion are respectively in a first closed state and a second closed state. When the first portion and the second portion are respectively in the first closed state and the second closed state and at least a portion of the first connection portion is separated from the second portion, the first portion may be switched from the first closed state to a first open state, so as to form a first opening on the canopy mechanism. The first portion and the second portion are disposed opposite to each other in a direction parallel to the first pivot axis. The first portion includes: a first pivoting member configured to pivot around the first pivot axis between a first closed position and a first open position; a first fixed portion connected to the carrier body; and a first cover extending between the first fixed portion and the first pivoting member, the first connection portion being disposed on the first cover. When the first pivoting member is at the first closed position, the first cover is unfolded between the first fixed portion and the first pivoting member, and the first portion is in the first closed state. When the first pivoting member is at the first open position, the first cover is folded between the first fixed portion and the first pivoting member, and the first portion is in the first open state. The canopy mechanism further includes a pivoting joint. The pivoting joint includes: a positioning member including an engagement portion and a first pivoting portion connected with each other, the engagement portion being connected to the carrier body; and a rotating member including a rotating portion and a mounting portion, the rotating portion being pivotably connected to the first pivoting portion, so that the rotating member is pivotable around the first pivot axis, and the mounting portion is connected to the first pivoting member. The carrier body is provided with a main body portion and a limiting member, the limiting member includes: a base portion fixed to the main body portion; and an engagement flange disposed at the end of the base portion that is away from the main body portion. An engagement groove is formed in the engagement portion, a lower end of the engagement portion is provided with an engagement opening, the engagement opening is in communication with the engagement groove, and the engagement flange is engaged to the engagement groove via the engagement opening, so that the positioning member is connected to the limiting member and then is connected to the main body portion.

In an embodiment, a groove wall of the engagement groove is provided with a locking protrusion, and the engagement flange is provided with a locking recess. When the engagement flange is engaged to the engagement groove, the locking protrusion is engaged in the locking recess, so as to limit the engagement portion from moving towards a direction in which the engagement groove is disengaged from the engagement flange.

In an embodiment, the positioning member further includes an unlocking portion, and the unlocking portion is formed by extending the groove wall of the engagement groove that is provided with the locking protrusion. When the locking protrusion is engaged into the locking recess, the unlocking portion is driven to generate elastic deformation towards a direction away from the limiting member, so that the locking protrusion is disengaged from the locking recess, so as to allow the engagement portion to move towards the direction in which the engagement groove is disengaged from the engagement flange.

### BRIEF DESCRIPTION OF THE DRAWINGS

The above and other objectives, features and advantages of the present application will become clearer through more detailed description of preferred embodiments of the present application shown in the drawings. The same reference signs in all drawings indicate the same portions, and the drawings are not intentionally scaled proportionally according to actual dimensions, the focus is made on illustrating the main idea of the present application.

Other features, objectives and advantages of the present application will become more apparent by reading detailed description of non-restrictive embodiments made with reference to the following drawings.
FIG. 1 is a perspective view of a carrier provided with a canopy mechanism according to an embodiment of the present application, illustrating that the canopy mechanism is in an unfolded state.
FIG. 2 is another perspective view of the carrier shown in FIG. 1, illustrating that a first portion is in a first open state, and a second portion is in a second closed state.
FIG. 3 is another perspective view of the carrier shown in FIG. 1, illustrating that the first portion is in a first closed state, and the second portion is in a second open state.
FIG. 4 is another perspective view of the carrier shown in FIG. 1, illustrating that the first portion is in the first closed state, and the second portion is in the second open state.
FIG. 5 is another perspective view of the carrier shown in FIG. 1, illustrating that the first portion is in the first open state, and the second portion is in the second open state.
FIG. 6 is a schematic structural diagram of the first portion and the second portion of the canopy mechanism shown in FIG. 1.
FIG. 7 is another schematic structural view of the first portion and the second portion shown in FIG. 6, illustrating that a first cover, a first pivoting member, a second cover and a second pivoting member are shown in a decomposed state.
FIG. 8 is a perspective view of a carrier provided with a canopy mechanism according to an embodiment of the present application, illustrating that the canopy mechanism is in an unfolded state.
FIG. 9 is a perspective view of the carrier shown in FIG. 8, illustrating that a first portion is in a first open state.
FIG. 10 is a perspective view of a carrier provided with a canopy mechanism according to an embodiment of the present application, illustrating that the canopy mechanism is in an unfolded state.
FIG. 11 is an enlarged view of a portion A in FIG. 10.
FIG. 12 is another perspective view of the carrier shown in FIG. 10, illustrating that a first portion is in a first open state.
FIG. 13 is an enlarged view of a portion B in FIG. 12.
FIG. 14a is a side view of a second pivoting member in the canopy mechanism shown in FIG. 10, illustrating that partial structures of the second pivoting member are omitted.
FIG. 14b is a section view taken along a line C-C of FIG. 14a, illustrating that partial structures are shown in an enlarged view.
FIG. 15 is a perspective view of a carrier provided with a canopy mechanism according to an embodiment of the present application, illustrating that the canopy mechanism is in an unfolded state.
FIG. 16 is another perspective view of the carrier shown in FIG. 15, illustrating that a second portion is in a second open state.
FIG. 17 is a perspective view of a carrier provided with a canopy mechanism according to an embodiment of the present application, illustrating that the canopy mechanism is in an unfolded state.
FIG. 18 is another perspective view of the carrier shown in FIG. 17, illustrating that a second portion is in a second open state.
FIG. 19 is a perspective view of a carrier provided with a canopy mechanism according to an embodiment of the present application, illustrating that the canopy mechanism is in an unfolded state.
FIG. 20 is another perspective view of the carrier shown in FIG. 19, illustrating that a second portion is in a second open state.
FIG. 21 is a perspective view of a carrier provided with a canopy mechanism according to an embodiment of the present application, illustrating that the canopy mechanism is in an unfolded state.
FIG. 22 is another perspective view of the carrier shown in FIG. 21, illustrating that a second portion is in a second open state.
FIG. 23 is a perspective view of a carrier provided with a canopy mechanism according to an embodiment of the present application, illustrating that the canopy mechanism is in an unfolded state.
FIG. 24 is another perspective view of the carrier shown in FIG. 21, illustrating that a second portion is in a second open state.
FIG. 25 is a perspective view of a carrier provided with a canopy mechanism according to an embodiment of the present application, illustrating that the canopy mechanism is in an unfolded state.
FIG. 26 is another perspective view of the carrier shown in FIG. 25, illustrating that a first portion is in a first open state.
FIG. 27 is another perspective view of the carrier shown in FIG. 25, illustrating that the first portion and a second portion are omitted, and a pivoting joint is shown in a disassembled state.
FIG. 28 is a side view of the canopy mechanism shown in FIG. 25, illustrating that a first cover is partially folded upwards to show the pivoting joint.
FIG. 29a is a side view of the canopy mechanism shown in FIG. 25, illustrating that the first cover covers the pivoting joint.
FIG. 29b is a side view of the canopy mechanism shown in FIG. 25, illustrating that the first cover is partially folded upwards, and the pivoting joint is removed.
FIG. 30 is a side view of the carrier shown in FIG. 25, illustrating that the first cover is partially folded upwards to show the pivoting joint.
FIG. 31 is a side view of the carrier shown in FIG. 25, illustrating that the first cover is partially folded upwards to show the pivoting joint, and the first cover is shown in a schematic physical view.
FIG. 32 is another perspective view of the carrier shown in FIG. 25.
FIG. 33 is a perspective view of a carrier provided with a canopy mechanism according to an embodiment of the present application, illustrating that the canopy mechanism is in an unfolded state.
FIG. 34 is a perspective view of a carrier provided with a canopy mechanism according to an embodiment of the present application, illustrating that the canopy mechanism is in an unfolded state.
FIG. 35 is another perspective view of the carrier shown in FIG. 34, illustrating that a third cover is stored in a storage bag.
FIG. 36 is another perspective view of the carrier shown in FIG. 34, illustrating that the canopy mechanism is in the unfolded state, and the third cover is connected to a front end of a carrier body of the carrier.
FIG. 37 is a top reference view of the carrier shown in FIG. 34, illustrating that partial carrier structures are omitted, and the third cover is unfolded backwards relative to the carrier body.

### List of reference signs

1, canopy mechanism; 101, first opening; 102, second opening; 103, avoidance portion; 104, fixing member;
11, first portion; 111, first connection portion; 111a, first connection section; 111b, second connection section; 112, first pivoting member; 112a, first bent portion; 112b, plug-in connection portion; 112c, mounting hole; 113, first cover; 113a, first connection edge; 113b, first separable edge; 114, first supporting member; 114a, second pivoting hole; 115, first fixed portion;
12, second portion; 121, second connection portion; 121a, third connection section; 121b, fourth connection section; 122, second pivoting member; 122a, second bent portion; 122b, middle; 123, second cover; 123a, first connection band; 123b, second connection band; 123c, third connection band; 123d, fourth connection band; 123e, avoidance opening; 124, second supporting member; 125, second fixed portion; 126, connection assembly; 127, main body; 128, movable portion; 128a, second connection edge; 128b, second separable edge; 129, third connection portion; 129a, fifth connection section; 129b, sixth connection section;
131, sliding groove; 132, hook; 132a, hook portion; 132b, sliding portion; 133, hanging ring;
141, fourth connection portion; 141a, seventh connection section; 141b, eighth connection section;
16, pivoting joint; 161, positioning member; 161a, unlocking portion; 161b, extension portion; 161c, second pivoting portion; 161d, maintaining portion; 162, engagement portion; 162a, engagement groove; 162b, engagement opening; 162c, locking protrusion; 162d, engagement wall; 162e, through opening;
163, first pivoting portion; 164, rotating member; 164a, rotating portion; 164b, mounting portion; 165, mounting opening; 166, mounting cavity; 167, first wall; 167a, operation opening; 168, second wall; 168a, elastic arm; 169a, operation protrusion; 169b, mounting protrusion;
180, covering member; 181, third cover; 182, corner; 183, edge of a second end that is located between two corners; 184, edge of the third cover that is located between a first end of the third cover and a portion of the third cover located above the second pivoting member; 185, front opening; 186, side opening; 187, top opening; 188, storage bag; 189, storage opening;
2, carrier; 20, opening; 21, carrier body; 21a, main body portion; 211, front end; 212, side edge; 21b, limiting member; 213, base portion; 214, engagement flange; 214a, locking recess; and
D1, first direction; D2, second direction; D3, first opening direction; D4, first closing direction; D5, second opening direction; D6, second closing direction; X1, first pivot axis; X2, second pivot axis.

### DETAILED DESCRIPTION

To make the objectives, technical solutions and advantages of the present application clearer, the present application will be further described below in detail in combination with the drawings and embodiments. It should be understood that the specific embodiments described herein are only used to explain the present application and are not intended to limit the present application.

It should be noted that, an element, when being referred to as being "connected" to another element, may be connected to the other element directly and combined into a whole therewith, or an intermediate element may be present at the same time to indirectly connect the one element to the other element through the intermediate element. The terms "mounted", "one end", "the other end" and similar expressions used herein are for illustrative purposes only.

Unless otherwise defined, all technical and scientific terms used herein have the same meanings as commonly understood by those skilled in the art to which the present application belongs. The terms used in the specification of the present application are merely for the purpose of describing specific embodiments, and are not intended to limit the present application. As used herein, the term "and/or" includes any and all combinations of one or more associated listed items.

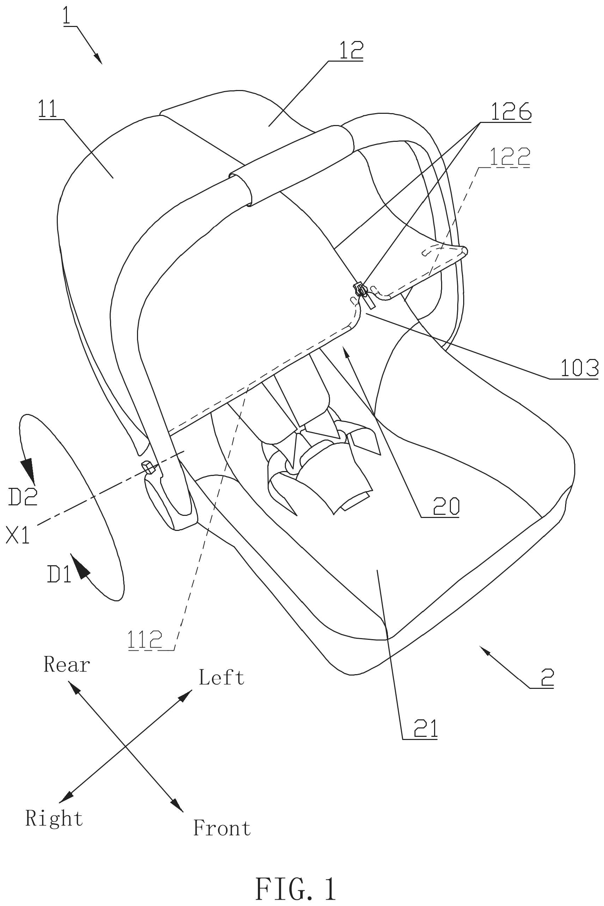

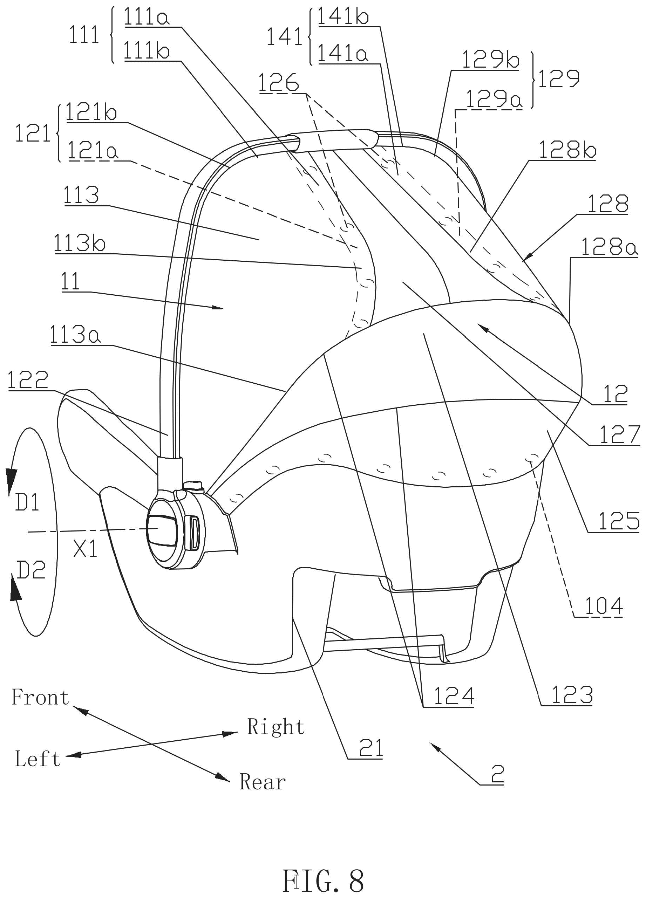

Referring to FIGs. 1 to 5, an embodiment of the present application provides a canopy mechanism 1, and the canopy mechanism 1 is mounted on a carrier 2 and is switchable (pivotable) between an unfolded state and a folded state around a first pivot axis X 1. The carrier 2 may be used for carrying an object, a child, a pet, and the like, which is not limited in the present application. In the embodiment of the present application, the carrier 2 is a carrycot, but this is merely exemplary, and the carrier 2 may further be, for example, a child safety seat, a stroller, a trailer, a children's bed, a rocking chair, etc. A user may be, for example, a caregiver of a child. Optionally, the carrier 2 includes a carrier body 21, the carrier body 21 is provided with a space for carrying the object, the child or the pet, the canopy mechanism 1 is mounted on the carrier body 21. For ease of description, the following directional terms are defined with reference to the carrier 2 shown in FIG. 1, when the canopy mechanism 1 is in the unfolded state, the orientation of an opening 20 of the canopy mechanism 1 is defined as a forward direction, a direction opposite to the forward direction is defined as a backward direction, and the forward-backward direction is a longitudinal direction of the carrier 2; two opposite directions in an extension direction of the first pivot axis X1 are respectively defined as a left direction and a right direction, the left-right direction is a transverse direction of the carrier 2, and the longitudinal direction of the carrier 2 and the transverse direction of the carrier 2 are orthogonal to each other. Pivoting directions around the first pivot axis X1 (referring to FIGs. 1 and 8) includes a first direction D1 and a second direction D2 opposite to each other, the transverse direction of the carrier 2 is perpendicular to a plane where the first direction D1 and the second direction D2 are located.

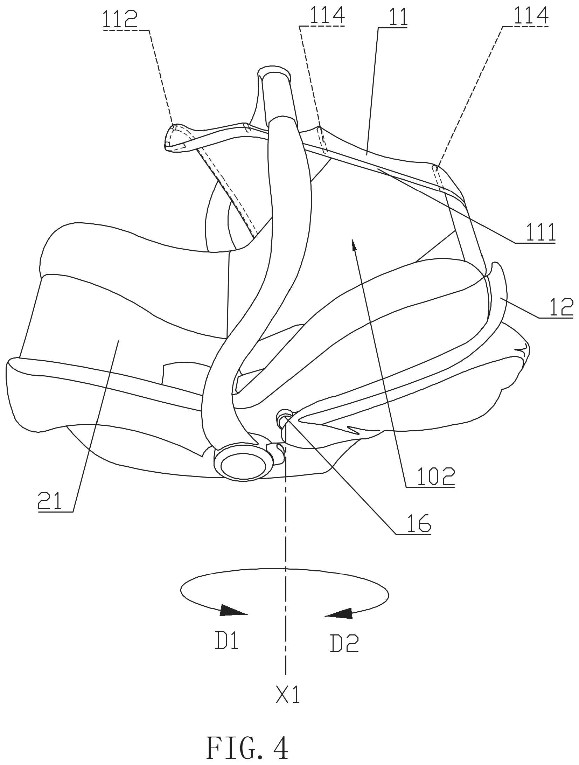

With continued reference to FIGs. 1 to 5, the canopy mechanism 1 provided in the embodiment of the present application includes a first portion 11 and a second portion 12, and the first portion 11 and the second portion 12 are disposed opposite to each other in a direction parallel to the first pivot axis X1. In other words, the first portion 11 and the second portion 12 are disposed adjacent to each other in the transverse direction of the carrier 2. It should be noted that although in the present embodiment, the first portion 11 is disposed on a right side of the carrier 2, the second portion 12 is disposed on a left side of the carrier 2, this is merely exemplary, the first portion 11 may also be disposed on the left side of the carrier 2, and the second portion 12 may also be disposed on the right side of the carrier 2. The first portion 11 and the second portion 12 are pivotably disposed on the carrier 2 by, for example, a pivoting joint 16 (referring to FIG. 4), respectively, thus the first portion 11 is switchable (e.g., pivotable) between a first closed state and a first open state, and the second portion 12 is switchable (e.g., pivotable) between a second closed state and a second open state. Optionally, the pivoting joint 16 may maintain the first portion 11 in the first closed state, the first open state or any state therebetween; and the pivoting joint 16 may maintain the second portion 12 in the second closed state, the second open state or any state therebetween. It should be noted that the pivoting joint 16 mentioned in the present application may use any suitable pivoting apparatus known in the art.

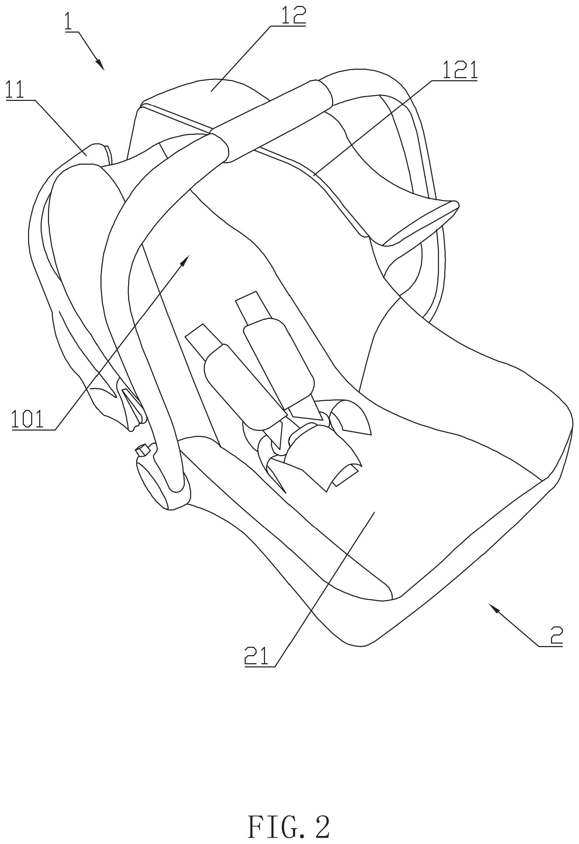

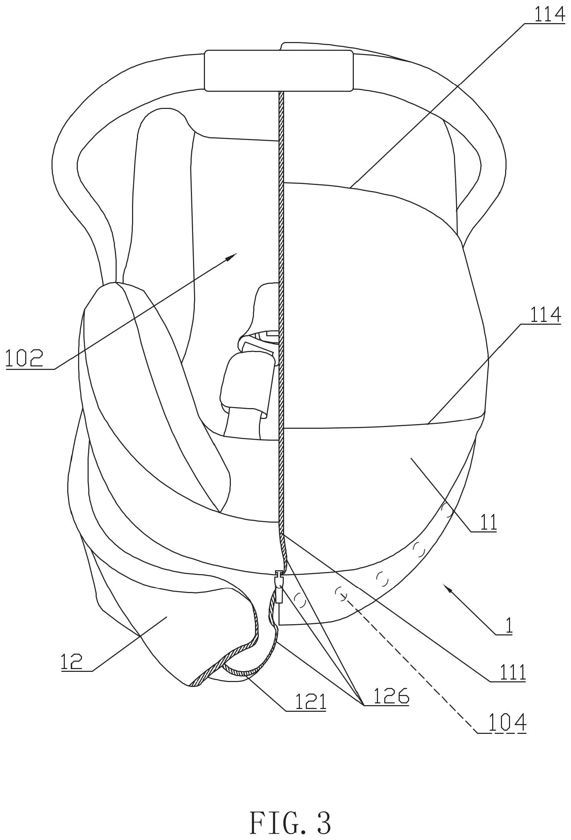

As shown in FIG. 3, in the present embodiment, the first portion 11 is provided with a first connection portion 111, and the first connection portion 111 is separably connected with the second portion 12, so that the first portion 11 is separably connected with the second portion 12. Optionally, as shown in FIG. 2, the second portion 12 is provided with a second connection portion 121, and the second connection portion 121 is separably connected with the first connection portion 111, so that the first portion 11 is separably connected with the second portion 12. When the first connection portion 111 is connected to the second portion 12, for example, connected to the second connection portion 121 of the second portion 12, the canopy mechanism 1 is capable of pivoting around the first pivot axis X1 between an unfolded state and a folded state. Referring to FIG. 1, when the canopy mechanism 1 is in the unfolded state, the canopy mechanism 1 is capable of pivoting around the first pivot axis X1 along the second direction D2 to the folded state. Similarly, when the canopy mechanism 1 is in the folded state, the canopy mechanism 1 is capable of pivoting around the first pivot axis X1 along the first direction D1 to the unfolded state.

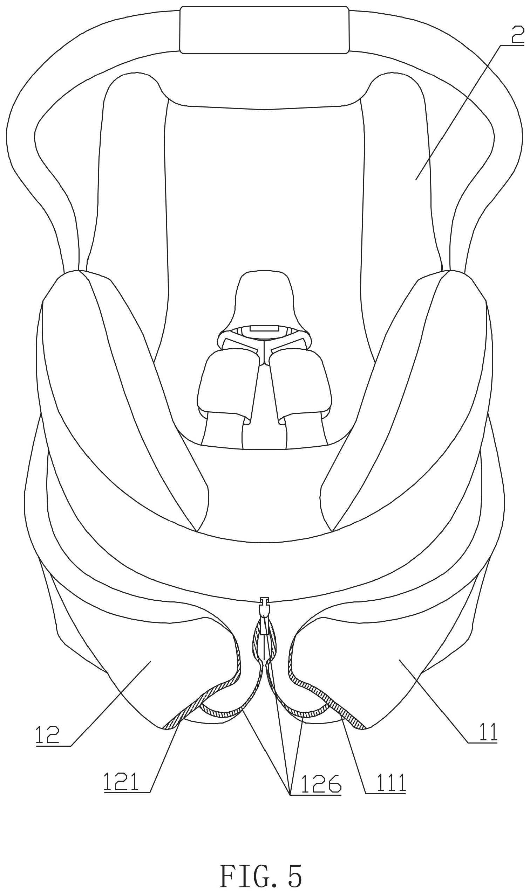

Referring to FIGs. 1 and 2, when the canopy mechanism 1 is in the unfolded state, the first portion 11 and the second portion 12 are respectively in the first closed state and the second closed state. At this time, if the first portion 11 is separated from the second portion 12, for example, the first connection portion 111 is separated from the second connection portion 121, the first portion 11 may be independently switched from the first closed state to the first open state, so as to form a first opening 101 on the canopy mechanism 1, as shown in FIG. 2; the second portion 12 may likewise be independently switched from the second closed state to the second open state, so as to form a second opening 102 on the canopy mechanism 1, as shown in FIGs. 3 and 4; and it can be understood that, when the first portion 11 is switched to the first open state, the second portion 12 may also be switched to the second open state, as shown in FIG. 5.

In the present embodiment, when one of the first opening 101 and the second opening 102 is formed on the canopy mechanism 1, on one hand, a caregiver located on one side (e.g., the left side or the right side) of the canopy mechanism 1 may interact with a child or a pet (e.g., fondle the child or the pet) in the carrier 2 through the first opening 101 or the second opening 102, or touch (e.g., pick up) an object placed in the carrier 2; and on the other hand, the first portion 11 in the first closed state or the second portion 12 in the second closed state may meet the requirement of protecting the child, the pet or the object in the carrier 2. For example, when the first portion 11 is switched to the first open state to form the first opening 101, the second portion 12 is in the second closed state, the caregiver located on the right side of the first portion may conveniently interact with the child or the pet in the carrier 2 through the first opening 101, or touch the object in the carrier 2, meanwhile the second portion 12 may provide protection for the child, the pet or the object in the carrier 2, for example, shading from the sun and sheltering from wind and rain, etc. Optionally, in other embodiments, only one of the first portion 11 and the second portion 12 may form an opening. For example, the first portion 11 may independently form the first opening 101, while the second portion 12 cannot be independently switched to the second open state, and thus cannot independently form the second opening 102. Or, the second portion 12 may independently form the second opening 102, while the first portion 11 cannot be independently switched to the first open state, and thus cannot independently form the first opening 101.

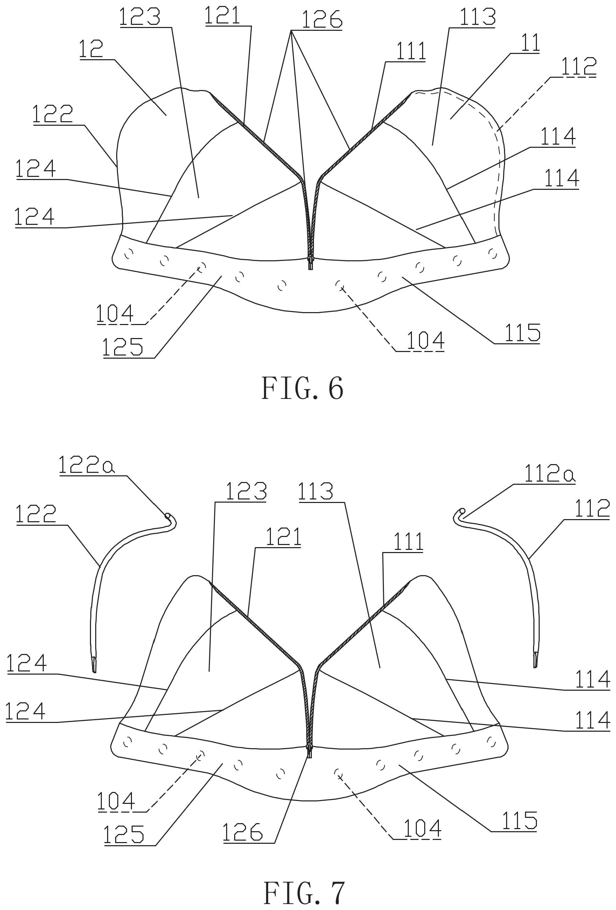

Referring to FIGs. 1, 6 and 7, in the present embodiment, the first portion 11 includes a first pivoting member 112, a first fixed portion 115 and a first cover 113. The first pivoting member 112 is pivotably connected to the carrier body 21 of the carrier 2 by, for example, a pivoting joint 16, thus the first pivoting member 112 is capable of pivoting around the first pivot axis X1 between a first closed position and a first open position. Optionally, the first pivoting member 112 is disposed in the first cover 113 in a penetration manner. Optionally, the first pivoting member 112 is disposed at a first end of the first cover 113 in the penetration manner. The first pivoting member 112 may provide a support for the unfolded first cover 113. Optionally, the first pivoting member 112 may be configured to be strip-shaped, rod-shaped, tubular or plate-shaped. Optionally, the first fixed portion 115 is connected to the carrier body 21 of the carrier 2 by a fixing member 104, for example, connected to a rear end of the carrier body 21 of the carrier 2. Optionally, the fixing member 104 may be any suitable fixing structure, for example, one rack in a zipper assembly, one sticking strip in a Velcro assembly, one of a hole and a buckle portion in a button assembly, one buckle portion in a buckle latch assembly, one buckle portion in a magnetic buckle assembly, etc. Optionally, the carrier body 21 of the carrier 2 may be provided with a fixing mechanism (not shown) cooperating with the fixing member 104, for example, another rack in the zipper assembly, another sticking strip in the Velcro assembly, the other of the hole and the buckle portion in the button assembly, another buckle portion in the buckle latch assembly, another buckle portion in the magnetic buckle assembly, and other fixing mechanisms capable of cooperating with the fixing member 104. The first fixed portion 115 is connected to the first cover 113, for example, connected to a second end of the first cover 113. Optionally, the first fixed portion 115 may be formed by the second end of the first cover 113.

When the canopy mechanism 1 is in the unfolded state, the first end of the first cover 113 and the second end of the first cover 113 are disposed at intervals in a pivoting direction around the first pivot axis X1, the first end of the first cover 113 forms a portion of an edge of the opening 20 of the canopy mechanism 1, that is, the first end of the first cover 113 is a front end of the first cover 113; and correspondingly, the second end of the first cover 113 is a rear end of the first cover 113.

Optionally, the first connection portion 111 is disposed on the edge of the first cover 113 that is located between the first end of the first cover 113 and the second end of the first cover 113. Optionally, at least a portion of the first cover 113 is made of a transparent material. The caregiver may observe the child, the pet or the object in the carrier 2 through the portion made of the transparent material, thereby realizing the interaction with the child or the pet to a certain extent or confirming the state of the object. When the first pivoting member 112 is at the first closed position, the first cover 113 extends and unfolds between the first fixed portion 115 and the first pivoting member 112, and the first portion 11 is in the first closed state. When the first pivoting member 112 is at the first open position, the first cover 113 is folded between the first fixed portion 115 and the first pivoting member 112, and the first portion 11 is in the first open state.

With continued reference to FIGs. 1, 6 and 7, in the present embodiment, the second portion 12 has a structure similar to that of the first portion 11. Specifically, the second portion 12 includes a second pivoting member 122, a second fixed portion 125 and a second cover 123. The second pivoting member 122 is pivotably connected to the carrier body 21 of the carrier 2 by, for example, another pivoting joint 16, thus the second pivoting member 122 is capable of pivoting around the first pivot axis X1 between a second closed position and a second open position. Optionally, the second pivoting member 122 is disposed in the second cover 123 in the penetration manner, for example, the second pivoting member 122 is disposed at a first end of the second cover 123 in the penetration manner. The second pivoting member 122 may provide a support for the unfolded second cover 123. Optionally, the second pivoting member 122 may be configured to be strip-shaped, rod-shaped, tubular or plate-shaped. The second fixed portion 125 is connected to the rear end of the carrier body 21 of the carrier 2 by, for example, a fixing member 104. Optionally, the fixing member 104 may be any suitable fixing structure, for example, one rack in a zipper assembly, one sticking strip in a Velcro assembly, one of a hole and a buckle portion in a button assembly, one buckle portion in a buckle latch assembly, one buckle portion in a magnetic buckle assembly, etc. Optionally, the carrier body 21 of the carrier 2 may be provided with a fixing mechanism (not shown) cooperating with the fixing member 104, for example, another rack in the zipper assembly, another sticking strip in the Velcro assembly, the other of the hole and the buckle portion in the button assembly, another buckle portion in the buckle latch assembly, another buckle portion in the magnetic buckle assembly, and other fixing mechanisms capable of cooperating with the fixing member 104. The second fixed portion 125 is connected to the second cover 123, for example, connected to a second end of the second cover 123. Optionally, the second fixed portion 125 may be formed by the second end of the second cover 123. Optionally, the second fixed portion 125 and the first fixed portion 115 are of an integrated structure, so that the first portion 11 and the second portion 12 are connected together. Optionally, no matter whether the first connection portion 111 and the second connection portion 121 are connected with or separated from each other, the second fixed portion 125 and the first fixed portion 115 are not connected together.

When the canopy mechanism 1 is in the unfolded state, the first end of the second cover 123 and the second end of the second cover 123 are disposed at intervals in the pivoting direction around the first pivot axis X1, the first end of the second cover 123 forms a portion of the edge of the opening 20 of the canopy mechanism 1, that is, the first end of the second cover 123 is a front end of the second cover 123; and the second end of the second cover 123 is a rear end of the second cover 123.

Optionally, the second connection portion 121 is disposed on the edge of the second cover 123 that is located between the first end of the second cover 123 and the second end of the second cover 123. Optionally, at least a portion of the second cover 123 is made of a transparent material. The caregiver may observe the child, the pet or the object in the carrier 2 through the portion made of the transparent material, thereby realizing the interaction with the child or the pet to a certain extent or confirming the state of the object. When the second pivoting member 122 is at the second closed position, the second cover 123 extends and unfolds between the second fixed portion 125 and the second pivoting member 122, and the second portion 12 is in the second closed state. When the second pivoting member 122 is at the second open position, the second cover 123 is folded between the second fixed portion 125 and the second pivoting member 122, and the second portion 12 is in the second open state.

Optionally, the second fixed portion 125 and the first fixed portion 115 are of a separate two-piece design, the first connection portion 111 extends to the first fixed portion 115, and the second connection portion 121 extends to the second fixed portion 125. When the first connection portion 111 is separated from the second connection portion 121, the first portion 11 and the second portion 12 are of the separate two-piece design.

With continued reference to FIGs. 1, 6 and 7, in the present embodiment, a connection assembly 126 is a zipper assembly, and the second connection portion 121 is separably connected with the first connection portion 111 by the connection assembly 126. The zipper assembly includes two racks and a zipper pull that cooperate with each other, the two racks are respectively disposed on the first connection portion 111 and the second connection portion 121, and the two racks are connected with or separated from each other by pulling the zipper pull, so as to realize the connection and separation between the first connection portion 111 and the second connection portion 121. In the present embodiment, the first pivoting member 112 is disposed at the first end of the first cover 113, the second pivoting member 122 is disposed at the first end of the second cover 123, and the first connection portion 111 and the second connection portion 121 are respectively disposed on the edge of the first cover 113 that is located between the first end of the first cover 113 and the second end of the first cover 113 and on the edge of the second cover 123 that is located between the first end of the second cover 123 and the second end of the second cover 123. Thus, an extension direction of the first connection portion 111 intersects with an extension direction of the first pivoting member 112, an extension direction of the second connection portion 121 intersects with an extension direction of the second pivoting member 122, and extension directions of the two racks of the connection assembly 126 respectively intersect with the extension direction of the first pivoting member 112 and the extension direction of the second pivoting member 122. Optionally, the connection assembly 126 may also be other suitable connection assemblies, for example, two sticking strips of a Velcro assembly, a hole and a buckle portion in a button assembly, two buckle portions of a buckle latch assembly, two buckle portions of a magnetic buckle assembly, and the like, which are respectively disposed on the first connection portion 111 and the second connection portion 121. For example, in the embodiment in which the connection assembly 126 is a Velcro assembly, the two sticking strips of the Velcro assembly are respectively disposed on the first connection portion 111 and the second connection portion 121, and the extension directions of the sticking strips respectively intersect with the extension direction of the first pivoting member 112 and the extension direction of the second pivoting member 122.

With continued reference to FIGs. 1, 6 and 7, in the present embodiment, an end of the first pivoting member 112 is provided with a first bent portion 112a. The first bent portion 112a is bent towards a direction facing away from the first end of the first cover 113 and extends along the edge of the first cover 113 that is located between the first end of the first cover 113 and the second end of the first cover 113, that is, the first bent portion 112a has a portion extending along the extension direction of the first connection portion 111. Similarly, an end portion of the second pivoting member 122 is provided with a second bent portion 122a. The second bent portion 122a is bent towards a direction facing away from the first end of the second cover 123 and extends along the edge of the second cover 123 that is located between the first end of the second cover 123 and the second end of the second cover 123, that is, the second bent portion 122a has a portion extending along the extension direction of the second connection 121. The first bent portion 112a and the second bent portion 122a provide supports in the extension direction of the first connection portion 111 and the extension direction of the second connection portion 121, and thus can provide supports for the connection assembly 126 disposed on the first connection portion 111 and the second connection portion 121. For example, in the embodiment in which the connection assembly 126 is a zipper assembly, the first bent portion 112a and the second bent portion 122a may respectively provide supports for the two racks of the zipper assembly, which facilitates smooth pulling of the zipper pull. In addition, the first bent portion 112a and the second bent portion 122a may further form an avoidance portion 103 on the edge of the opening 20 of the canopy mechanism 1, which may provide an avoidance space for the zipper pull of the zipper assembly 126 as an example, and may further provide a good esthetic appearance for the opening 20 of the canopy mechanism 1.

With continued reference to FIGs. 1, 6 and 7, in the present embodiment, the first portion 11 may further include at least one first supporting member 114. Optionally, the first supporting member 114 is disposed in the first cover 113 in the penetration manner. When the first portion 11 is in the first closed state, in a direction around the first pivot axis X1, the first supporting member 114 is located between the first end of the first cover 113 and the second end of the first cover 113, that is, the first supporting member 114 is located between the first pivoting member 112 and the first fixed portion 115. The first supporting member 114 may provide a support for the unfolded first cover 113. Optionally, the first supporting member 114 extends between the second end of the first cover 113 and the edge of the first cover 113 that is provided with the first connection portion 111. Optionally, the first supporting member 114 may be of a strip-shaped, rod-shaped or tubular structure. Optionally, the first portion 11 includes two first supporting members 114, and the two first supporting members 114 are disposed adjacent to each other along the direction around the first pivot axis X1. Similarly, the second portion 12 further includes at least one second supporting member 124. Optionally, the second supporting member 124 is disposed in the second cover 123 in the penetration manner. When the second portion 12 is in the second closed state, in the direction around the first pivot axis X1, the second supporting member 124 is located between the first end of the second cover 123 and the second end of the second cover 123, that is, the second supporting member 124 is located between the second pivoting member 122 and the second fixed portion 125. The second supporting member 124 may provide a support for the unfolded second cover 123. Optionally, the second supporting member 124 extends between the second end of the second cover 123 and the edge of the second cover 123 that is provided with the second connection portion 121. Optionally, the second supporting member 124 may be of a strip-shaped, rod-shaped or tubular structure. Optionally, the second portion 12 includes two second supporting members 124, and the two second supporting members 124 are disposed adjacent to each other along the direction around the first pivot axis X1.

Referring to FIG. 1, in the present embodiment, when the first portion 11 is in the first closed state, the first pivoting member 112 and the first supporting member 114 jointly support the unfolded first cover 113, at this time, the stress of the first end of the first cover 113 is greater than the stress of a portion other than the first end of the first cover 113 and the second end of the first cover 113, therefore the first pivoting member 112 can be set to be capable of providing a greater support force than the first supporting member 114. For example, the first pivoting member 112 may use a stronger material than the first supporting member 114, or on the structure, the first pivoting member 112 may be set to be thicker than the first supporting member 114. Similarly, when the second portion 12 is in the second closed state, the second pivoting member 122 and the second supporting member 124 jointly support the unfolded second cover 123, at this time, the stress of the first end of the second cover 123 is greater than the stress of a portion other than the first end of the second cover 123 and the second end of the second cover 123, therefore the second pivoting member 122 can be set to be capable of providing a greater support force than the second supporting member 124. For example, the second pivoting member 122 may use a stronger material than the second supporting member 124, or on the structure, the second pivoting member 122 may be set to be thicker than the second supporting member 124.

Referring to FIGs. 1 and 3, in an embodiment of the present application, when the canopy mechanism 1 is in the unfolded state, projections of the first portion 1 and the second portion 12 on a reference plane are axisymmetric. The term "reference plane" may be any suitable projection plane, and the projection plane may be a plane of a real object and may also be a virtual plane. For example, when the carrier 2 is placed on a plane such as a ground or desktop, the ground or desktop itself or the virtual plane where they are located is the "reference plane". The projections of the first portion 1 and the second portion 12 on the reference plane being axisymmetric may be understood as that the first portion 11 and the second portion 12 have the same outline contour, and the first portion 11 and the second portion 12 are symmetrically arranged on the carrier 2. In the present embodiment, a boundary between the first portion 11 and the second portion 12 (i.e., a trajectory formed by the first connection portion 111 and the second connection portion 121 at the joint) is axisymmetrically disposed, wherein a projection of the boundary on the virtual plane is a straight line parallel to a virtual center line (not shown) of the carrier body 21 of the carrier 2.

Optionally, in an embodiment of the present application, when the canopy mechanism 1 is in the unfolded state, the projections of the first portion 11 and the second portion 12 on the reference plane are centrosymmetric. In other words, after one of the projection of the first portion 11 and the projection of the second portion 12 is rotated 180° around a virtual symmetry point (not shown), the projection may coincide with the other of the projection of the first portion 11 and the projection of the second portion 12. Optionally, when the canopy mechanism 1 is in the unfolded state, the projections of the first portion 11 and the second portion 12 on the reference plane may also have other location relationships and area sizes. For example, the projections of the first portion 11 and the second portion 12 on the reference plane have the same area, but the first portion 11 and the second portion 12 are not mirror-symmetric or centrosymmetric. In such an embodiment, the projection of the boundary of the first portion 11 and the second portion 12 on the virtual plane may be a curve having at least one S-shaped unit.

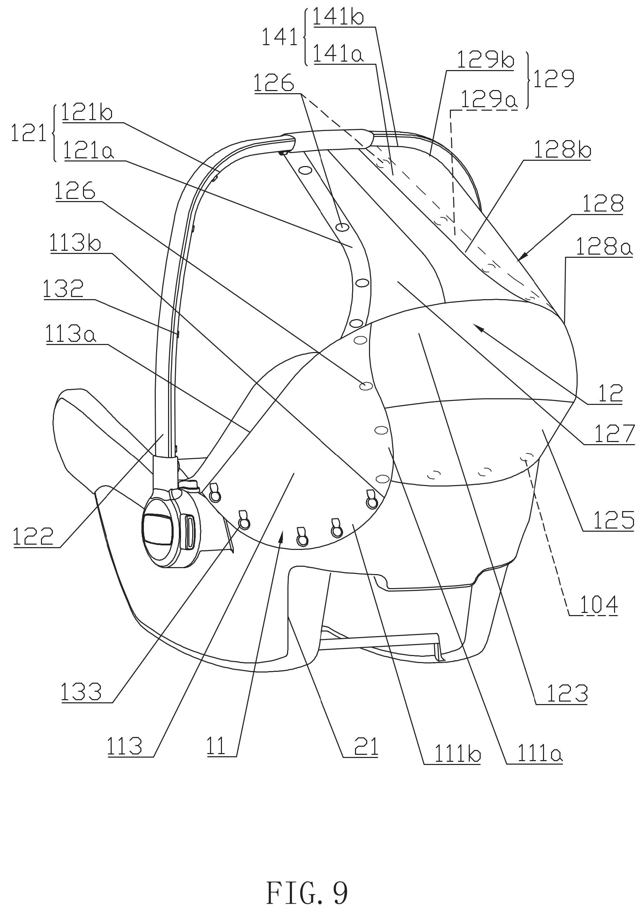

Referring to FIGs. 8 and 9, FIGs. 8 and 9 illustrate another embodiment of the present application. In the present embodiment, the canopy mechanism 1 is mounted on the carrier body 21 and is switchable (pivotable) between the unfolded state and the folded state around the first pivot axis X1. The carrier 2 according to the present embodiment has substantially the same structure as the carrier 2 according to the embodiment shown in FIG.s 1 to 5. The canopy mechanism 1 provided in the embodiment of the present application includes a first portion 11 and a second portion 12, and the first portion 11 and the second portion 12 are disposed opposite to each other in the direction parallel to the first pivot axis X1. In other words, the first portion 11 and the second portion 12 are disposed adjacent to each other in the transverse direction of the carrier 2. It should be noted that, although in the present embodiment, the first portion 11 is disposed on the left side of the carrier 2, the second portion 12 is disposed on the right side of the carrier 2, this is merely exemplary, the first portion 11 may also be disposed on the right side of the carrier 2, and the second portion 12 may also be disposed on the left side of the carrier 2.

As shown in FIG. 8, in the present embodiment, the first portion 11 is provided with a first connection portion 111, and the first connection portion 111 is separably connected with the second portion 12, so that the first portion 11 is separably connected with the second portion 12. Optionally, as shown in FIG. 8, the second portion 12 is provided with a second connection portion 121, and the second connection portion 121 is separably connected with the first connection portion 111, so that the first portion 11 is separably connected with the second portion 12. When the first connection portion 111 is connected to the second portion 12, for example, connected to the second connection portion 121 of the second portion 12, the canopy mechanism 1 is capable of pivoting around the first pivot axis X1 between the unfolded state and the folded state. Referring to FIG. 8, when the canopy mechanism 1 is in the unfolded state, the canopy mechanism 1 is capable of pivoting around the first pivot axis X1 along the second direction D2 to the folded state. Similarly, when the canopy mechanism 1 is in the folded state, the canopy mechanism 1 is capable of pivoting around the first pivot axis X1 along the first direction D1 to the unfolded state.

Referring to FIGs. 8 and 9, when the canopy mechanism 1 is in the unfolded state, the first portion 11 and the second portion 12 are respectively in the first closed state and the second closed state. At this time, if the first portion 11 is separated from the second portion 12, for example, the first connection portion 111 is separated from the second connection portion 121, the first portion 11 may be switched from the first closed state to the first open state, so as to form a first opening 101 on the canopy mechanism 1, as shown in FIG. 9. On one hand, the caregiver located one side (e.g., the left side) of the canopy mechanism 1 may interact with the child or the pet in the carrier 2 through the first opening 101, or touch (e.g., pick up) the object placed in the carrier 2; and on the other hand, the second portion 12 in the second closed state may provide protection for the child, the pet or the object in the carrier 2, for example, shading from the sun and sheltering from wind and rain, etc.

With continued reference to FIGs. 8 and 9, in the present embodiment, the first portion 11 includes a first cover 113, and the first cover 113 has a first end and a second end. When the canopy mechanism 1 is in the unfolded state, the first end of the first cover 113 and the second end of the first cover 113 are disposed at intervals in the pivoting direction around the first pivot axis X1, and the first end of the first cover 113 is the front end of the first cover 113; and correspondingly, the second end of the first cover 113 is the rear end of the first cover 113. The first cover 113 is provided with a first connection edge 113a and a first separable edge 113b. A portion of the first separable edge 113b forms the first end of the first cover 113, the first connection edge 113a forms the second end of the first cover 113, and the other portion of the first separable edge 113b is located between the first end of the first cover 113 and the second end of the first cover 113 in the pivoting direction around the first pivot axis X1. The first connection edge 113a is connected to the second portion 12. The first connection portion 111 is disposed on the first separable edge 113b, that is, the first separable edge 113b is separably connected to the second portion 12 by the first connection portion 111. Optionally, at least a portion of the first cover 113 is made of a transparent material. The caregiver may observe the child, the pet or the object in the carrier 2 through the portion made of the transparent material, thereby realizing the interaction with the child or the pet to a certain extent or confirming the state of the object. When the first connection portion 111 is separated from the second portion 12, since the first connection edge 113a maintains the connection with the second portion 12, the first cover 113 is driven by the caregiver, or the first cover 113 automatically sags under the action of its own gravity, so that the first cover 113 is switched from a first cover state shown in FIG. 8 to a first exposure state shown in FIG. 9, so as to form the first opening 101 on the canopy mechanism 1. At this time, the first portion 11 is switched from the first closed state to the first open state.

With continued reference to FIGs. 8 and 9, in the present embodiment, the second portion 12 includes a second pivoting member 122, a second fixed portion 125 and a second cover 123. The second pivoting member 122 is pivotably connected to the carrier body 21 of the carrier 2 to pivot between a second closed position and a second open position around the first pivot axis X1. Optionally, the second pivoting member 122 is a carrying handle of the carrier body 21 of the carrier 2. As shown in FIG. 8, the canopy mechanism 1 is in the unfolded state, and the second pivoting member 122 is at the second closed position. At this time, the caregiver may drive the second pivoting member 122 to pivot around the first pivot axis X1 in the second direction D2 to the second open position, so that the canopy mechanism 1 is switched to the folded state. It can be understood that, when the second pivoting member 122 is at the second open position, the caregiver may drive the second pivoting member 122 to pivot around the first pivot axis X1 in the first direction D1 to the second closed position, so that the canopy mechanism 1 is switched to the unfolded state. The second pivoting member 122 may provide a support for the unfolded second cover 123. When the canopy mechanism 1 is switched to the unfolded state, the first end of the first cover 113 is connected to the second pivoting member 122, the first end of the second cover 123 is connected to the second pivoting member 122, and the second end of the second cover 123 is connected to the second fixed portion 125. Optionally, the second fixed portion 125 is connected to the rear end of the carrier body 21 of the carrier 2 by, for example, a fixing member 104. The fixing member 104 may be any suitable fixing structure, for example, one rack in a zipper assembly, one sticking strip in a Velcro assembly, one of a hole and a buckle portion in a button assembly, one buckle portion in a buckle latch assembly, one buckle portion in a magnetic buckle assembly, etc. Optionally, the carrier body 21 of the carrier 2 may be provided with a fixing mechanism (not shown) cooperating with the fixing member 104, for example, another rack in the zipper assembly, another sticking strip in the Velcro assembly, the other of the hole and the buckle portion in the button assembly, another buckle portion in the buckle latch assembly, another buckle portion in the magnetic buckle assembly and other fixing mechanisms capable of cooperating with the fixing member 104. When the canopy mechanism 1 is in the unfolded state, the first end of the second cover 123 and the second end of the second cover 123 are disposed at intervals in the pivoting direction around the first pivot axis X1, and the first end of the second cover 123 is a front end of the second cover 123; and the second end of the second cover 123 is a rear end of the second cover 123. Optionally, at least a portion of the second cover 123 is made of a transparent material. The caregiver may observe the child, the pet or the object in the carrier 2 through the portion made of the transparent material, thereby realizing the interaction with the child or the pet to a certain extent or confirming the state of the object. When the canopy mechanism 1 is in the unfolded state, the second pivoting member 122 is at the second closed position, the second cover 123 is unfolded between the second fixed portion 125 and the second pivoting member 122, and when the canopy mechanism 1 is in the folded state, the second pivoting member 122 is at the second open position, and the second cover 123 is folded between the second fixed portion 125 and the second pivoting member 122.

With continued reference to FIGs. 8 and 9, in the present embodiment, the first connection portion 111 includes a first connection section 111a and a second connection section 111b. The first connection section 111a extends along a first extension direction, the second connection section 111b extends along a second extension direction, and the first extension direction intersects with the second extension direction. The first connection section 111a is disposed at the portion of the first separable edge 113b that is located between the first end of the first cover 113 and the second end of the first cover 113, and the second connection section 111b is disposed at the portion of the first separable edge 113b that forms the first end of the first cover 113, that is, the second connection section 111b is disposed at the first end of the first cover 113. The second connection portion 121 includes a third connection section 121a and a fourth connection section 121b. The third connection section 121a is disposed on one edge of the second cover 123, the edge is located between the first end of the second cover 123 and the second end of the second cover 123 and is close to the first cover 113, and the fourth connection section 121b is disposed on the second pivoting member 122. When the first portion 11 is in the first closed state, both the third connection section 121a and the first connection section 111a extend along the first extension direction. The fourth connection section 121b extends along the second extension direction, the first portion 11 is in the first closed state, and the fourth connection section 121b is opposite to the first portion 11 in the pivoting direction around the first pivot axis X1. Therefore, one portion of the second connection portion 121 is disposed on the second pivoting member 122, and the other portion of the second connection portion 121 is disposed on the second cover 123. The first connection section 111a is separably connected to the third connection section 121a, and the second connection section 111b is separably connected to the fourth connection section 121b, thereby realizing a separable connection between the first portion 11 and the second portion 12. The first connection section 111a is separably connected to the third connection section 121a by, for example, a connection assembly 126. Optionally, the connection assembly 126 on the first connection section 111a and the third connection section 121a is a button assembly, a hole of the button assembly is disposed on one of the first connection section 111a and the third connection section 121a, and a buckle portion of the button assembly is disposed on the other of the first connection section 111a and the third connection section 121a. Optionally, the first connection section 111a is separably connected to the third connection section 121a by a plurality of connection assemblies 126. The second connection section 111b is separably connected to the fourth connection section 121b by, for example, a connection assembly 126. Optionally, the connection assembly 126 on the second connection section 111b and the fourth connection section 121b includes a hanging ring 133 and a hook 132 that are hooked to each other, for example, the hanging ring 133 is disposed on the second connection section 111b, the hook 132 is disposed on the fourth connection section 121b, and by hooking the hanging ring 133 to the hook 132 or taking off the hanging ring 133 from the hook 132, the second connection section 111b is connected to the fourth connection section 121b, or the second connection section 111b is separated from the fourth connection section 121b. Optionally, the second connection section 111b is provided with at least one hanging ring 133, and the second pivoting member 122 is provided with at least one hook 132. It should be noted that, the button assembly, the hanging ring 133 and the hook 132 used in the present embodiment are merely exemplary, and the connection assembly 126 on the first connection section 111a and the third connection section 121a and the connection assembly 126 on the second connection section 111b and the fourth connection section 121b may also be other suitable connection assemblies, such as a Velcro assembly, a buckle latch assembly, a magnetic buckle assembly, and the like, which is not limited in the present application. The connection assembly 126 on the first connection section 111a and the third connection section 121a and the connection assembly 126 on the second connection section 111b and the fourth connection section 121b may be the same or different. When the first portion 11 and the second portion 12 are respectively in the first closed state and the second closed state, and the first connection section 111a and the second connection section 111b are respectively separated from the third connection section 121a and the fourth connection section 121b, the first cover 113 is driven by the caregiver, or the first cover 113 automatically sags under the action of its own gravity, so that the first cover 113 is switched from the first cover state to the first exposure state, so as to form the first opening 101 on the canopy mechanism 1.

With continued reference to FIG. 8, when the first portion 11 is in the first closed state, the first connection section 111a and the third connection section 121a extend along the first extension direction, thus the connection assemblies 126 disposed on the first connection section 111a and the third connection section 121a, that is, a plurality of button assemblies are arranged along the first extension direction; and the second connection section 111b and the fourth connection section 121b extend along the second extension direction, thus the connection assemblies 126 disposed on the second connection section 111b and the fourth connection section 121b, that is, a plurality of groups of hanging rings 133 and hooks 132 are arranged along the second extension direction. The first extension direction and the second extension direction intersect with each other. In the present embodiment, when the first portion 11 is in the first closed state, the second extension direction is the same as an extension direction of the portion of the second pivoting member 122 that is opposite to the first portion 11 in the pivoting direction around the first pivot axis X1.

With continued reference to FIGs. 8 and 9, in the present embodiment, the second cover 123 further includes a main body 127 and a movable portion 128. A first end of the main body 127 is a portion of the first end of the second cover 123, the first end of the main body 127 is connected to the second pivoting member 122, and a second end of the main body 127 is the second end of the second cover 123. At least a portion of the movable portion 128 may be separated from the main body 127, so as to form a second opening (not shown, which may be understood with reference to the first opening 101), so that the second portion 12 is switched from the second closed state to the second open state. The second opening may implement the same function as the first opening 101. At least a portion of the body 127 is located between the movable portion 128 and the first portion 11. Optionally, the movable portion 128 is provided with a second connection edge 128a and a second separable edge 128b. When the second portion 12 is in the second closed state, the portion of the second separable edge 128b that is opposite to the second pivoting member 122 in the pivoting direction around the first pivot axis X1 is the other portion of the first end of the second cover 123 (as described above, the first end of the main body 127 is a portion of the first end of the second cover 123). The second connection edge 128a is connected to the main body 127, the second separable edge 128b is provided with a third connection portion 129, the third connection portion 129 includes a fifth connection section 129a and a sixth connection section 129b, the fifth connection section 129a is separably connected to the main body 127, and the sixth connection section 129b is separably connected to the second pivoting member 122. Correspondingly, the second portion 12 is further provided with a fourth connection portion 141, and the fourth connection portion 141 includes a seventh connection section 141a and an eighth connection section 141b. The seventh connection section 141a is disposed on the edge of the main body 127 that is located between the first end of the main body 127 and the second end of the main body 127 and is away from the first cover 113. The eighth connection section 141b is disposed on the second pivoting member 122. When the second portion 12 is in the second closed state, both the seventh connection section 141a and the fifth connection section 129a extend along a third extension direction. The eighth connection section 141b extends along a fourth extension direction, the movable portion 128 is in the second closed state, and the eighth connection section 141b is opposite to the movable portion 128 in the pivoting direction around the first pivot axis X1. In the present embodiment, the third connection section 121a is disposed on the edge of the main body 127 that is located between the first end of the main body 127 and the second end of the main body 127 and is close to the first cover 113.

Therefore, one portion of the fourth connection portion 141 is disposed on the second pivoting member 122, and the other portion of the fourth connection portion 141 is disposed on the main body 127. The fifth connection section 129a is separably connected to the seventh connection section 141a, the sixth connection section 129b is separably connected to the eighth connection section 141b, thereby realizing a separable connection between the movable portion 128 and the main body 127. The fifth connection section 129a is separably connected to the seventh connection section 141a by, for example, a connection assembly 126. Optionally, the connection assembly 126 on the fifth connection section 129a and the seventh connection section 141a is a button assembly, a hole of the button assembly is disposed on one of the fifth connection section 129a and the seventh connection section 141a, and a buckle portion of the button assembly is disposed on the other of the fifth connection section 129a and the seventh connection section 141a. Optionally, the fifth connection section 129a is separably connected to the seventh connection section 141a by a plurality of connection assemblies 126. The sixth connection section 129b is separably connected to the eighth connection section 141b by, for example, a connection assembly 126. Optionally, the connection assembly 126 on the sixth connection section 129b and the eighth connection section 141b includes a hanging ring 133 and a hook 132 that are hooked to each other, for example, the hanging ring 133 is disposed on the sixth connection section 129b, the hook 132 is disposed on the eighth connection section 141b, and by hooking the hanging ring 133 to the hook 132 or taking off the hanging ring 133 from the hook 132, the sixth connection section 129b is connected to the eighth connection section 141b, or the sixth connection section 129b is separated from the eighth connection section 141b. Optionally, the sixth connection section 129b is provided with at least one hanging ring 133, and the second pivoting member 122 is provided with at least one hook 132. It should be noted that, the button assembly, the hanging ring 133 and the hook 132 used in the present embodiment are merely exemplary, and the connection assembly 126 on the fifth connection section 129a and the seventh connection section 141a and the connection assembly 126 on the sixth connection section 129b and the eighth connection section 141b may also be other suitable connection assemblies, such as a Velcro assembly, a buckle latch, a magnetic buckle, and the like, which is not limited in the present application. The connection assembly 126 on the fifth connection section 129a and the seventh connection section 141a and the connection assembly 126 on the sixth connection section 129b and the eighth connection section 141b may be the same or different. When the first portion 11 and the second portion 12 are respectively in the first closed state and the second closed state, and the fifth connection section 129a and the sixth connection section 129b are respectively separated from the seventh connection section 141a and the eighth connection section 141b, the movable portion 128 is driven by the caregiver, or the movable portion 128 automatically sags under the action of its own gravity, so that the movable portion 128 is switched from a second cover state to a second exposure state, so as to form a second opening on the canopy mechanism 1, so that the second portion 12 is switched from the second closed state to the second open state.

With continued reference to FIG. 8, when the second portion 12 is in the second closed state, the fifth connection section 129a and the seventh connection section 141a extend along the third extension direction, thus the connection assemblies 126 disposed on the fifth connection section 129a and the seventh connection section 141a, that is, a plurality of button assemblies are arranged along the third extension direction; and the sixth connection section 129b and the eighth connection section 141b extend along the fourth extension direction, thus the connection assemblies 126 disposed on the sixth connection section 129b and the eighth connection section 141b, that is, a plurality of groups of hanging rings 133 and hooks 132 are arranged along the fourth extension direction. The third extension direction and the fourth extension direction intersect with each other. In the present embodiment, when the second portion 12 is in the second closed state, the fourth extension direction is the same as an extension direction of the portion of the second pivoting member 122 that is opposite to the movable portion 128 in the pivoting direction around the first pivot axis X1.

With continued reference to FIGs. 8 and 9, in the present embodiment, the second portion 12 further includes at least one second supporting member 124, and the second supporting member 124 is disposed in the second cover 123 in the penetration manner and substantially extends between the left side and right side of the second cover 123. When the second portion 12 is in the second closed state, in the direction around the first pivot axis X1, the second supporting member 124 is located between the first end of the second cover 123 (e.g., the main body 127) and the second end of the second cover 123 (e.g., the main body 127). The second supporting member 124 may provide a support for the unfolded second cover 123 (e.g., the main body 127). Optionally, the second supporting member 124 may be of a strip-shaped, rod-shaped or tubular structure. Optionally, the second portion 12 includes two second supporting members 124, and the two second supporting members 124 are disposed adjacent to each other along the direction around the first pivot axis X1. Optionally, the first portion 11 and the movable portion 128 are disposed between the second pivoting member 122 and the second supporting member 124 adjacent to the second pivoting member 122 in the direction around the first pivot axis X1. Optionally, the first connection edge 113a of the first cover 113 is disposed at a location corresponding to the second supporting member 124 and extends along an extension direction of the second supporting member 124. Optionally, the second connection edge 128a of the movable portion 128 is disposed at a location corresponding to the second supporting member 124 and extends along the extension direction of the second supporting member 124. Optionally, the first portion 11 and the movable portion 128 may also be disposed between two adjacent second supporting members 124, and the locations of the first connection section 111a, the second connection section 111b, the third connection section 121a, the fourth connection section 121b, the fifth connection section 129a, the sixth connection section 129b, the seventh connection section 141a and the eighth connection section 141b are correspondingly adjusted.

With continued reference to FIGs. 8 and 9, in the present embodiment, when the canopy mechanism 1 is in the unfolded state, the first portion 11 may be switched between the first open state and the first closed state, that is, the first cover 113 is switched between the first exposure state and the first cover state. Independently, the second portion 12 may also be switched between the second open state and the second closed state, that is, the movable portion 128 is switched between the second exposure state and the second cover state. Thus, the first opening 101 and/or the second opening may be freely formed on the canopy mechanism 1 depending on the requirements of the caregiver. When the canopy mechanism 1 is in the unfolded state, if only the first opening 101 is formed on the canopy mechanism 1, the second portion 12 in the second closed state may provide protection for the child, the pet or the object in the carrier 2, for example, shading from the sun and sheltering from wind and rain, and the like; if only the second opening 102 is formed on the canopy mechanism 1, the first portion 11 in the first closed state and the main body 127 of the second portion 12 in the second open state may provide protection for the child, the pet or the object in the carrier 2, for example, shading from the sun and sheltering from wind and rain, and the like; and if the first opening 101 and the second opening 102 are formed on the canopy mechanism 1, the main body 127 of the second portion 12 in the second open state may still provide protection for the child, the pet or the object in the carrier 2, for example, shading from the sun and sheltering from wind and rain, etc.

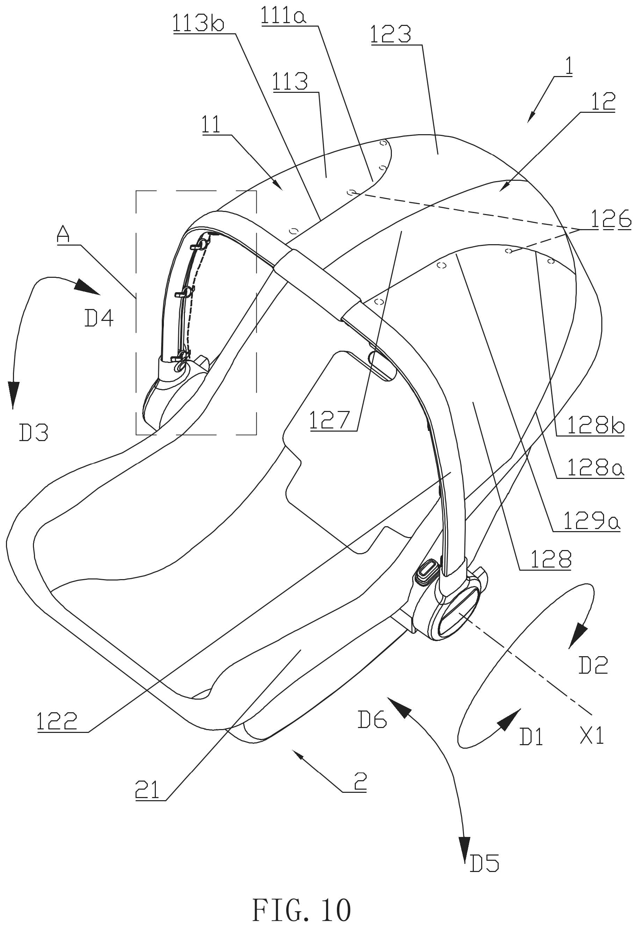

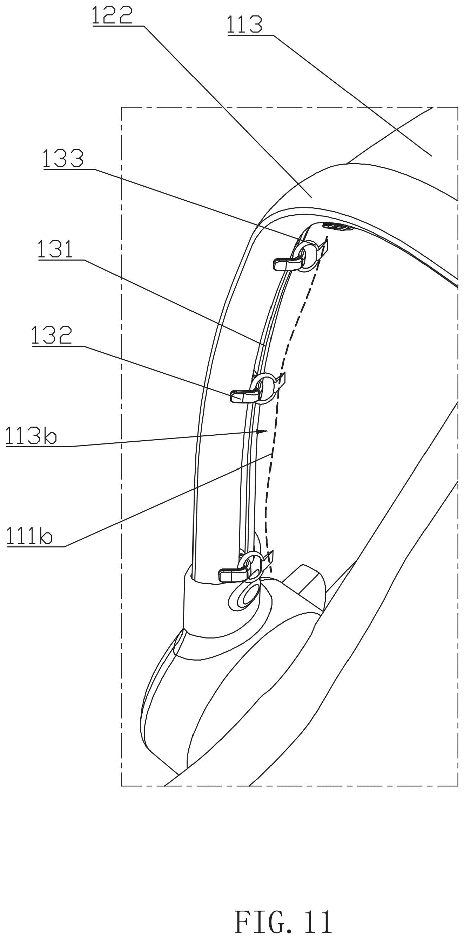

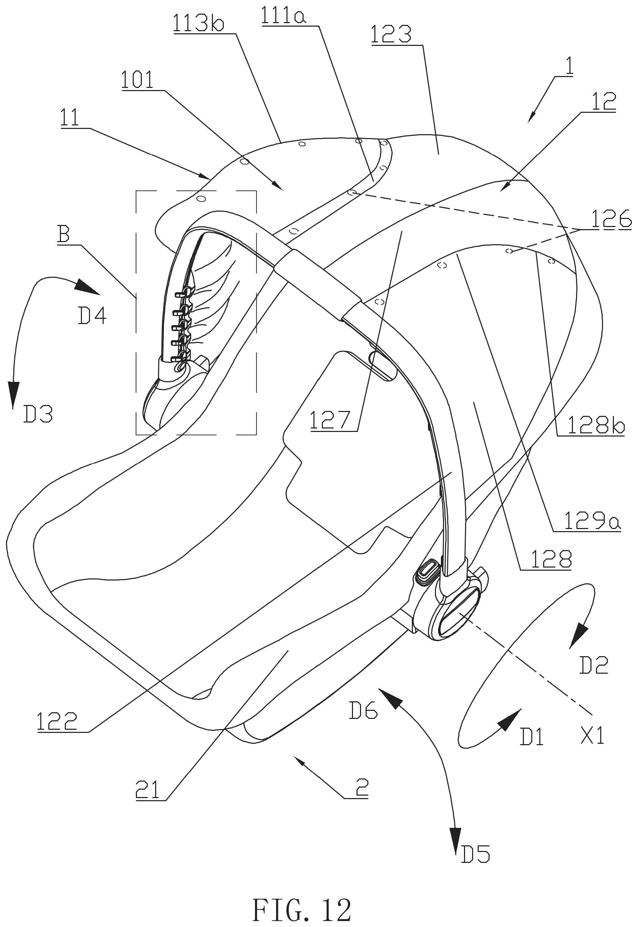

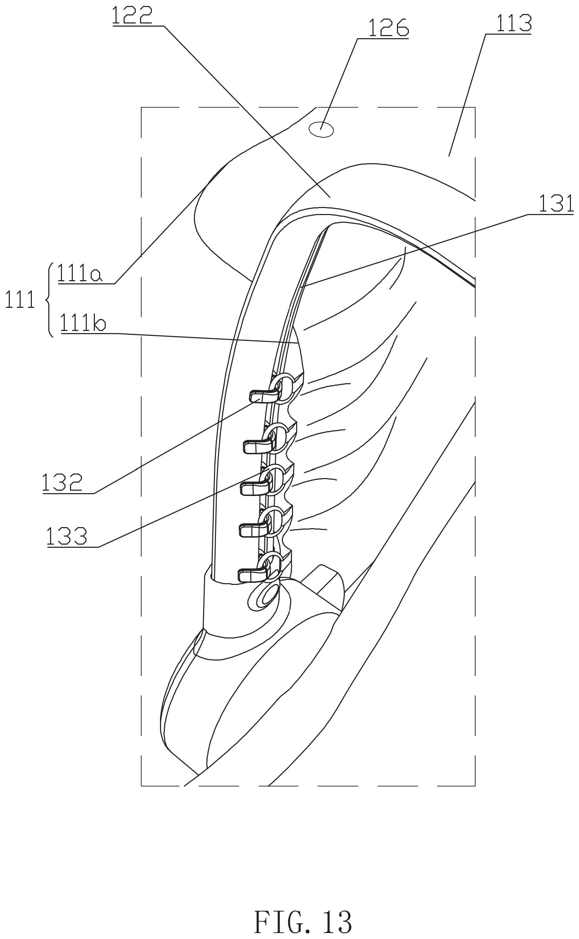

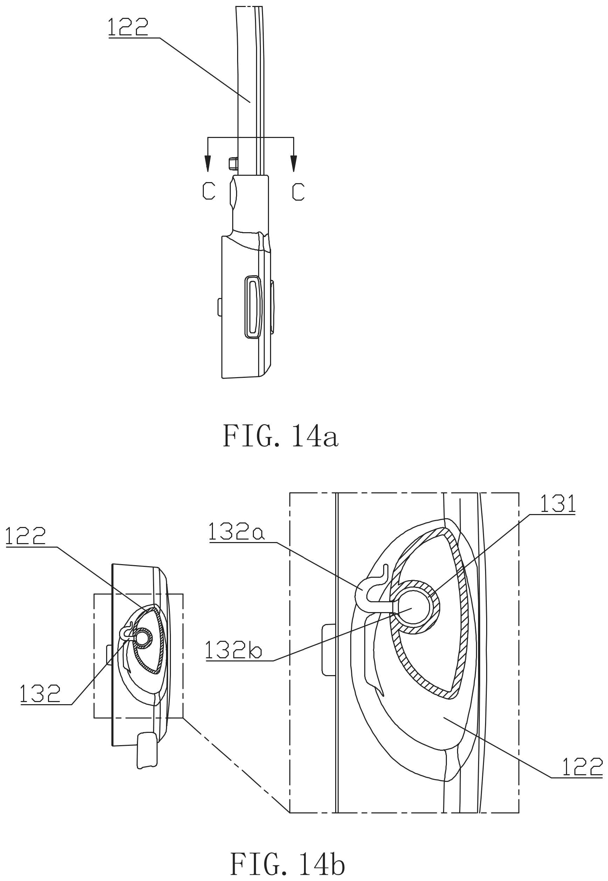

Referring to FIGs. 10 to 14b, FIGs. 10 to 14b illustrate another embodiment of the present application. The canopy mechanism 1 according to the present embodiment is similar to the canopy mechanism 1 according to the embodiment shown in FIGs. 8 and 9, and only differences therebetween are described below.

In the present embodiment, the second connection section 111b is slidably connected to the fourth connection section 121b, when the canopy mechanism 1 is in the unfolded state, that is, when the first portion 11 and the second portion 12 are respectively in the first closed state and the second closed state, if the first connection section 111a and the third connection section 121a remain connected, the first cover 113 in the first cover state cannot slide along the second pivoting member 122 towards a first opening direction D3, at this time, the second connection section 111b extends along the second extension direction and is connected to the fourth connection section 121b, and the first cover 113 remains in the first cover state, that is, the first portion 11 remains in the first closed state; and if the first connection section 111a is separated from the third connection section 121a, the first cover 113 is capable of sliding along the second pivoting member 122 towards the first opening direction D3 from the first cover state to the first exposure state. During the process of the first cover 113 sliding to the first exposure state, the first cover 113 folds itself, thus the second connection section 111b folds itself and no longer extends along the second extension direction, that is, the second connection section 111b folds itself while sliding along the second pivoting member 122, until sliding to a lower end of the second pivoting member 122. At this time, the second connection section 111b is separated from the fourth connection section 121b, the first cover 113 slides to the first exposure state, the first opening 101 is formed on the canopy mechanism 1, and the first portion 11 is switched from the first closed state to the first open state. When the first portion 11 is in the first open state, the caregiver may drive the first cover 113 to slide along the second pivoting member 122 towards a first closing direction D4 from the first exposure state to the first cover state, and then connect the first connection section 111a to the third connection section 121a, so that the first cover 113 remains in the first cover state, that is, the first portion 11 remains in the first closed state. Optionally, the fourth connection section 121b is provided with a sliding groove 131 extending along the second extension direction, one portion of the hook 132 is slidably disposed in the sliding groove 131, and the other portion of the hook 132 is hooked on the hanging ring 133 disposed on the second connection section 111b, thereby realizing a slidable connection between the second connection section 111b and the fourth connection section 121b.

In the present embodiment, optionally, the sixth connection section 129b is slidably connected to the eighth connection section 141b, when the canopy mechanism 1 is in the unfolded state, that is, when the first portion 11 and the second portion 12 are respectively in the first closed state and the second closed state, if the fifth connection section 129a and the seventh connection section 141a remain connected, the movable portion 128 in the second cover state cannot slide along the second pivoting member 122 towards a second opening direction D5, that is, the sixth connection section 129b is connected to the eighth connection section 141b, thereby maintaining the second portion 12 in the second closed state; and if the fifth connection section 129a is separated from the seventh connection section 141a, the movable portion 128 is capable of sliding along the second pivoting member 122 towards the second opening direction D5 from the second cover state to the second exposure state, that is, the sixth connection section 129b is capable of sliding along the second pivoting member 122 on the eighth connection section 141b to leave the eighth connection section 141b, so that the sixth connection section 129b is separated from the eighth connection section 141b, thus the second opening is formed on the canopy mechanism 1, and accordingly, the second portion 12 is switched from the second closed state to the second open state. When the second portion 12 is in the second open state, the caregiver may drive the movable portion 128 to slide along the second pivoting member 122 towards a second closing direction D6 from the second exposure state to the second cover state, and then connect the fifth connection section 129a to the seventh connection section 141a, so that the movable portion 128 remains in the second cover state, that is, the second portion 12 remains in the second closed state. Optionally, the eighth connection section 141b is provided with a sliding groove 131 extending along the fourth extension direction. One portion of the hook 132 is slidably disposed in the sliding groove 131, and the other portion of the hook 132 is hooked on the hanging ring 133 disposed on the sixth connection section 129b, thereby realizing a slidable connection between the sixth connection section 129b and the eighth connection section 141b.

In the present embodiment, optionally, the hook 132 disposed on the fourth connection section 121b and/or the eighth connection section 141b includes a hook portion 132a and a sliding portion 132b. The hook portion 132a is hooked on the hanging ring 133 disposed on the second connection section 111b and/or the sixth connection section 129b, and the sliding portion 132b is slidably disposed in the sliding groove 131. Optionally, the sliding portion 132b is set to be an approximately spherical structure, so as to be slidably clamped in the sliding groove 131.

In the present embodiment, when the canopy mechanism 1 is in the unfolded state, the hanging ring 133 may also be first separated from the hook 132, so that the second connection section 111b is separated from the fourth connection section 121b, the first connection section 111a is then separated from the third connection section 121a, and the first cover 113 is driven by the caregiver, or the first cover 113 automatically sags under the action of its own gravity, so that the first cover 113 is switched from the first cover state to the first exposure state, so as to form the first opening 101. Similarly, when the canopy mechanism 1 is in the unfolded state, the hanging ring 133 may also be first separated from the hook 132, so that the sixth connection section 129b is separated from the eighth connection section 141b, the fifth connection section 129a is then separated from the seventh connection section 141a, and the movable portion 128 is driven by the caregiver, or the movable portion 128 automatically sags under the action of its own gravity, so that the movable portion 128 is switched from the second cover state to the second exposure state, so as to form the second opening. Reference may be made to the description with respect to the embodiment shown in FIGs. 8 and 9. The same as the embodiment shown in FIGs. 8 and 9, in the present embodiment, the first opening 101 and/or the second opening may be freely formed on the canopy mechanism 1 depending on the requirements of the caregiver.

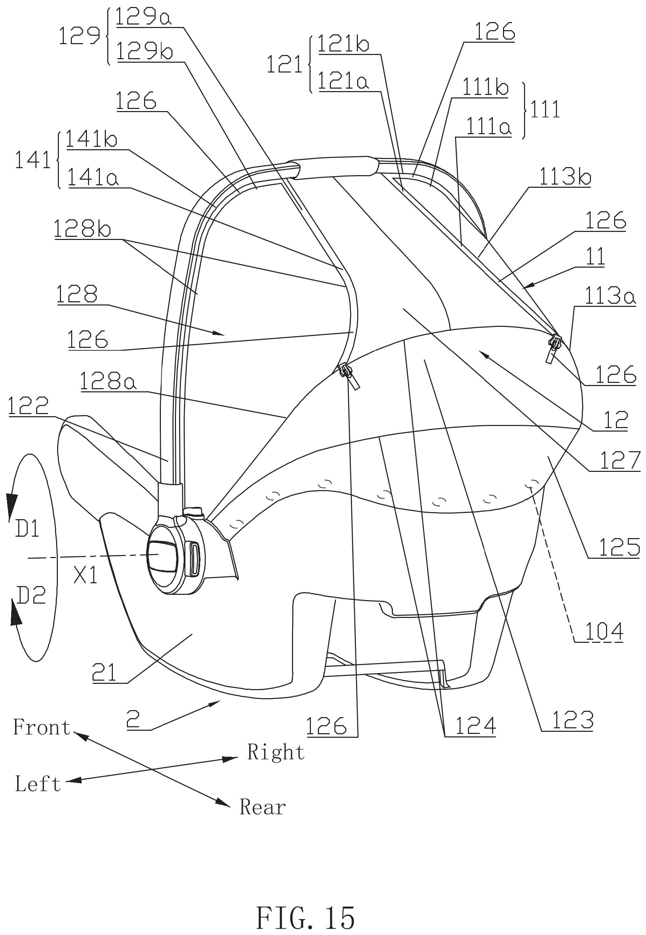

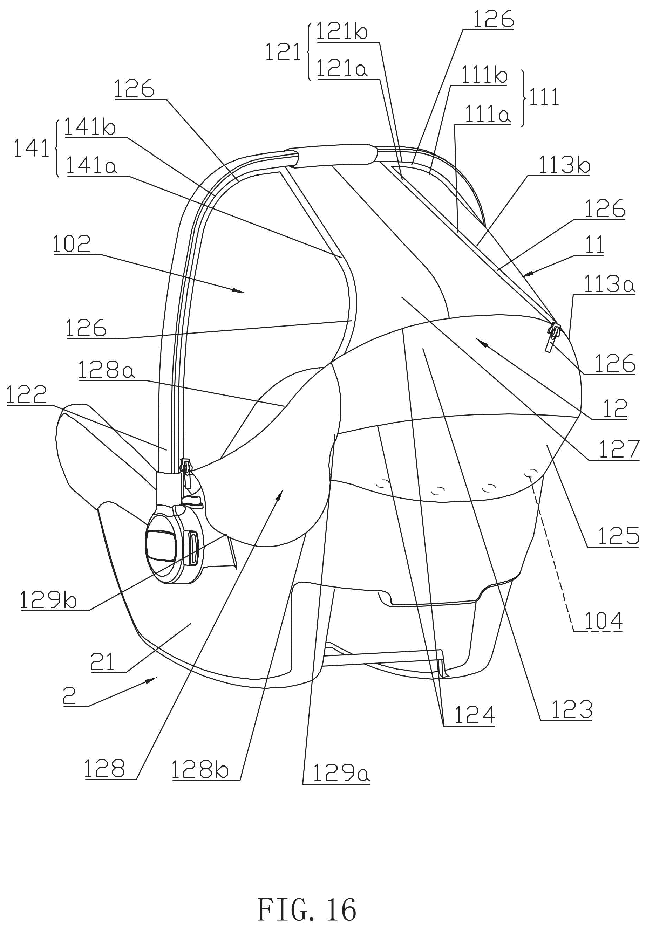

Referring to FIGs. 15 and 16, FIGs. 15 and 16 illustrate another embodiment of the present application. The canopy mechanism 1 according to the present embodiment is similar to the canopy mechanism 1 according to the embodiment shown in FIGs. 8 and 9, and only differences therebetween are described below.

In the present embodiment, the connection assembly 126 is set to be a zipper assembly including racks and a zipper pull. The first connection section 111a and the second connection section 111b are provided with a first rack, the third connection section 121a and the fourth connection section 121b are provided with a second rack, and the first rack and the second rack are engaged with or disengaged from each other by driving the zipper pull cooperating with the first rack and the second rack, so that the first connection portion 111 is connected to the second connection portion 121 or separated from the second connection portion 121. Similarly, the fifth connection section 129a and the sixth connection section 129b are provided with a third rack, the seventh connection section 141a and the eighth connection section 141b are provided with a fourth rack, and the third rack and the fourth rack are engaged with or disengaged from each other by driving the zipper pull cooperating with the third rack and the fourth rack, so that the third connection portion 129 is connected to the fourth connection portion 141 or separated from the fourth connection portion 141. The same as the embodiment shown in FIGs. 8 and 9, in the present embodiment, the first opening and/or the second opening 102 may be freely formed on the canopy mechanism 1 depending on the requirements of the caregiver.

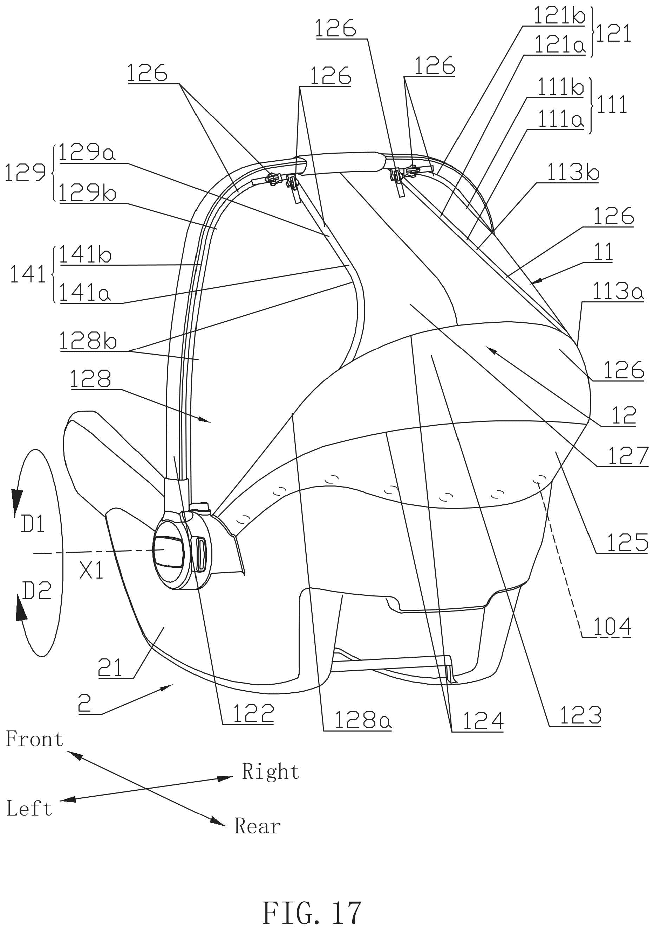

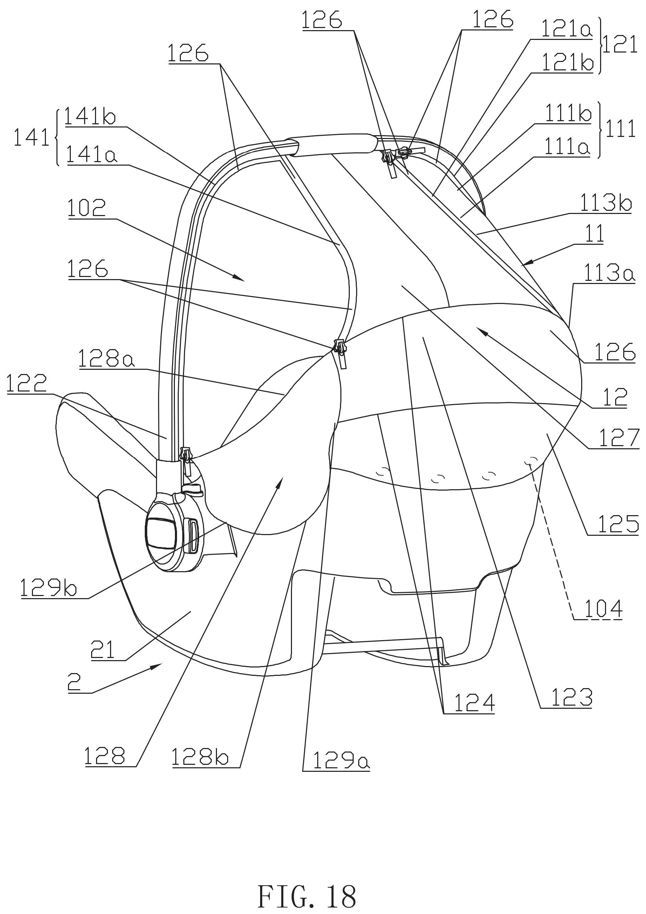

Referring to FIGs. 17 and 18, FIGs. 17 and 18 illustrate another embodiment of the present application. The canopy mechanism 1 according to the present embodiment is similar to the canopy mechanism 1 according to the embodiment shown in FIGs. 15 and 16, and only differences therebetween are described below.

In the present embodiment, the first connection section 111a and the second connection section 111b of the first connection portion 111 are respectively provided with a first rack and a second rack, the third connection section 121a and the fourth connection section 121b of the second connection portion 121 are respectively provided with a third rack and a fourth rack, the first rack and the third rack are engaged with or disengaged from each other by a zipper pull cooperating with the first rack and the third rack, and the second rack and the fourth rack are engaged with or disengaged from each other by a zipper pull cooperating with the second rack and the fourth rack. When the first rack and the third rack are engaged with each other, and the second rack and the fourth rack are engaged with each other, the first connection portion 111 is connected to the second connection portion 121. When the first rack and the third rack are disengaged from each other, and the second rack and the fourth rack are disengaged from each other, the first connection portion 111 is separated from the second connection portion 121. Similarly, the fifth connection section 129a and the sixth connection section 129b are respectively provided with a fifth rack and a sixth rack, the seventh connection section 141a and the eighth connection section 141b are respectively provided with a seventh rack and an eighth rack, the fifth rack and the seventh rack are engaged with or disengaged from each other by driving a zipper pull cooperating with the fifth connection section 129a and the seventh connection section 141a, and the sixth rack and the eighth rack are engaged with or disengaged from each other by driving a zipper pull cooperating with the sixth connection section 129b and the eighth connection section 141b. When the fifth rack and the seventh rack are engaged with each other, and the sixth rack and the eighth rack are engaged with each other, the third connection portion 129 is connected to the fourth connection portion 141. When the fifth rack and the seventh rack are disengaged from each other, and the sixth rack and the eighth rack are disengaged from each other, the third connection portion 129 is separated from the fourth connection portion 141. The same as the embodiment shown in FIG.s 15 and 16, in the present embodiment, the first opening and/or the second opening 102 may be freely formed on the canopy mechanism 1 depending on the requirements of the caregiver.

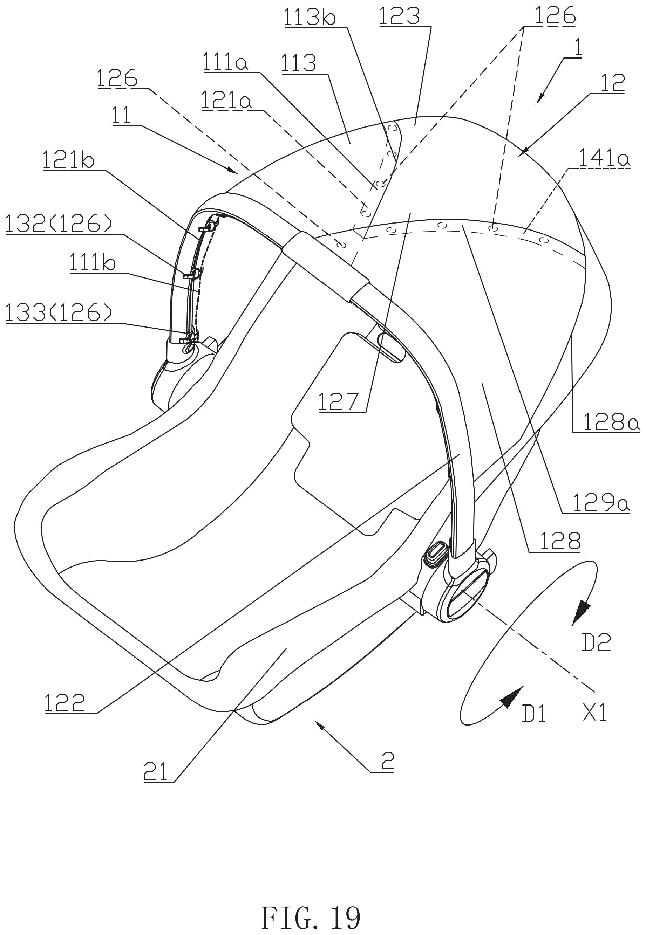

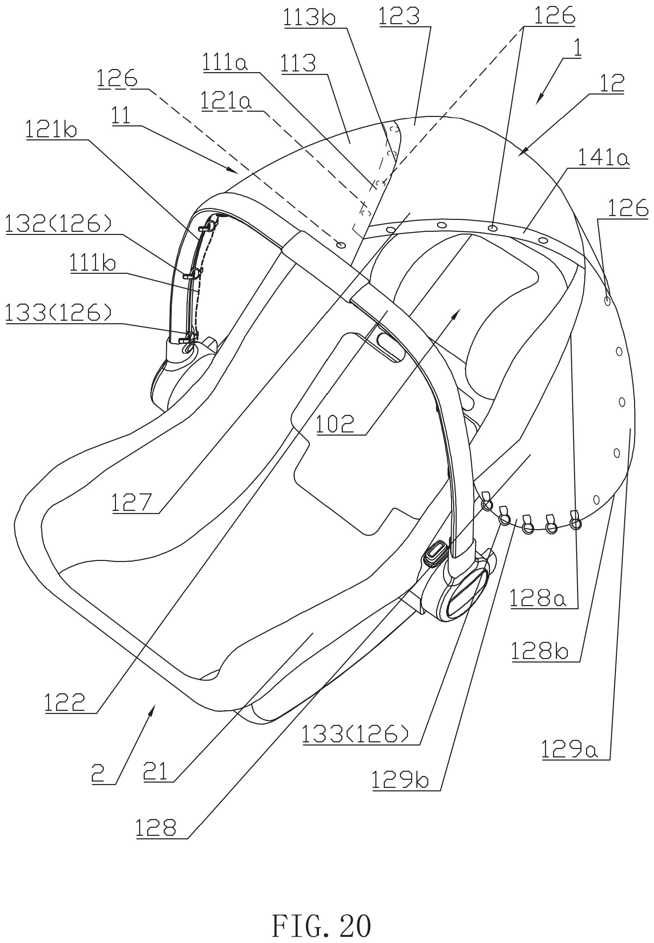

Referring to FIGs. 19 and 20, FIGs. 19 and 20 illustrate another embodiment of the present application. The canopy mechanism 1 according to the present embodiment is similar to the canopy mechanism 1 according to the embodiment shown in FIGs. 8 and 9, and only differences therebetween are described below.

In the present embodiment, the first end of the main body 127 of the second cover 123 is not connected to the second pivoting member 122, thus the first end of the second cover 123 is formed only by the portion of the second separable edge 128b that is opposite to the second pivoting member 122 in the pivoting direction around the first pivot axis X1. A front segment of the first connection section 111a is separably connected with a front segment of the fifth connection section 129a by, for example, a connection assembly 126. A rear segment of the first connection section 111a is separably connected with the third connection section 121a by, for example, a connection assembly 126. A rear segment of the fifth connection section 129a is separably connected with the seventh connection section 141a by, for example, a connection assembly 126. Optionally, the connection assembly 126 may be a Velcro assembly, a button assembly, a buckle latch assembly, a magnetic buckle assembly, etc. When the canopy mechanism 1 is in the unfolded state, the front segment of the first connection section 111a is separated from the front segment of the fifth connection section 129a, the rear segment of the first connection section 111a is separated from the third connection section 121a, and the second connection section 111b is separated from the fourth connection section 121b, thereby allowing the first cover 113 to be switched from the first cover state to the first exposure state, so as to form the first opening on the canopy mechanism 1. Similarly, when the canopy mechanism 1 is in the unfolded state, the front segment of the first connection section 111a is separated from the front segment of the fifth connection section 129a, the rear segment of the fifth connection section 129a is separated from the seventh connection section 141a, and the sixth connection section 129b is separated from the eighth connection section 141b, thereby allowing the movable portion 128 to be switched from the second cover state to the second exposure state, so as to form the second opening 102 on the canopy mechanism 1. In the present embodiment, one of the first opening and the second opening 102 may be freely formed on the canopy mechanism 1 depending on the requirements of the caregiver.

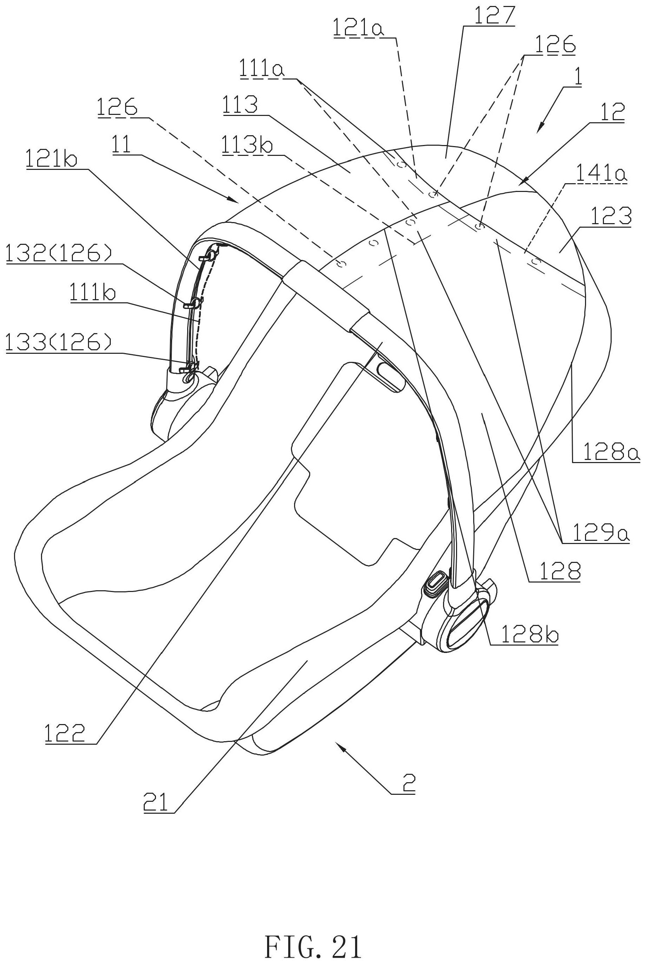

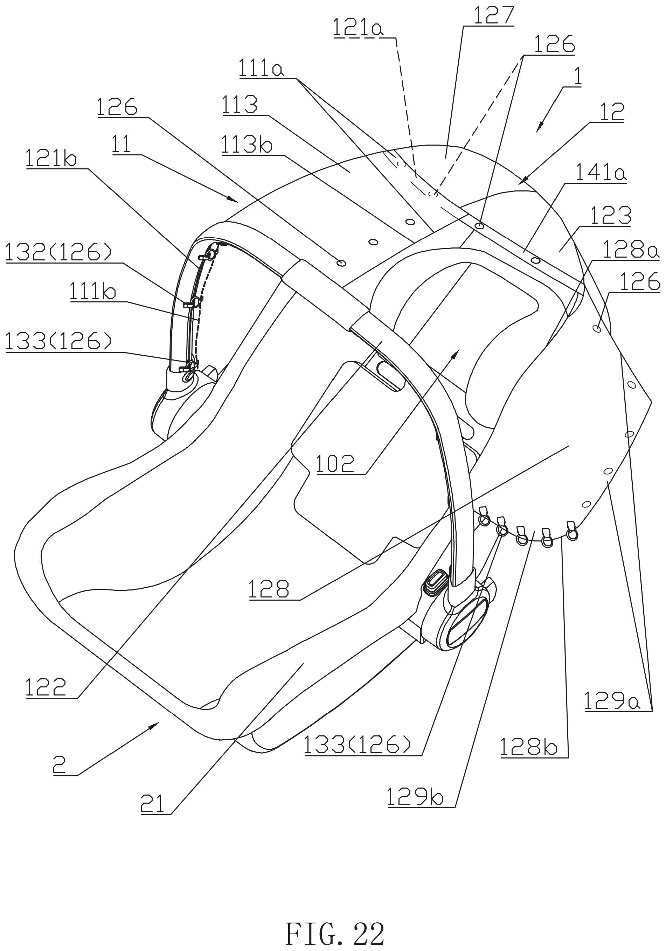

Referring to FIGs. 21 and 22, FIGs. 21 and 22 illustrate another embodiment of the present application. The canopy mechanism 1 according to the present embodiment is similar to the canopy mechanism 1 according to the embodiment shown in FIGs. 19 and 20, and only differences therebetween are described below.

In the present embodiment, the first connection section 111a and the fifth connection section 129a are set to be an approximate L-shape, one side of the L-shape approximately extends along the longitudinal direction of the carrier 2, and the other side of the L-shape approximately extends along the transverse direction of the carrier 2. The segment of the first connection section 111a that extends along the longitudinal direction of the carrier 2 is the front segment of the first connection section 111a, and the segment of the first connection section 111a that extends along the transverse direction of the carrier 2 is the rear segment of the first connection section 111a. The segment of the fifth connection section 129a that extends along the longitudinal direction of the carrier 2 is the front segment of the fifth connection section 129a, and the segment of the fifth connection section 129a that extends along the transverse direction of the carrier 2 is the rear segment of the fifth connection section 129a. The front segment of the first connection section 111a is separably connected to the front segment of the fifth connection section 129a by, for example, a connection assembly 126. The third connection section 121a and the seventh connection section 141a are disposed at the first end of the main body 127, and the first end of the main body 127 of the second cover 123 is connected to the rear segment of the first connection section 111a and the rear segment of the fifth connection section 129a by, for example, a connection assembly 126. When the canopy mechanism 1 is in the unfolded state, the front segment of the first connection section 111a is separated from the front segment of the fifth connection section 129a, the rear segment of the first connection section 111a is separated from the third connection section 121a, and the second connection section 111b is separated from the fourth connection section 121b, thereby allowing the first cover 113 to be switched from the first cover state to the first exposure state, so as to form the first opening on the canopy mechanism 1. Similarly, when the canopy mechanism 1 is in the unfolded state, the front segment of the first connection section 111a is separated from the front segment of the fifth connection section 129a, the rear segment of the fifth connection section 129a is separated from the seventh connection section 141a, and the sixth connection section 129b is separated from the eighth connection section 141b, thereby allowing the movable portion 128 to be switched from the second cover state to the second exposure state, so as to form the second opening 102 on the canopy mechanism 1. In the present embodiment, one of the first opening and the second opening 102 may be freely formed on the canopy mechanism 1 depending on the requirements of the caregiver. In the present embodiment, the main body 127 is located on the sides of the first portion 11 and the movable portion 128 that are away from the second pivoting member 122 in the pivoting direction around the first pivot axis X1.

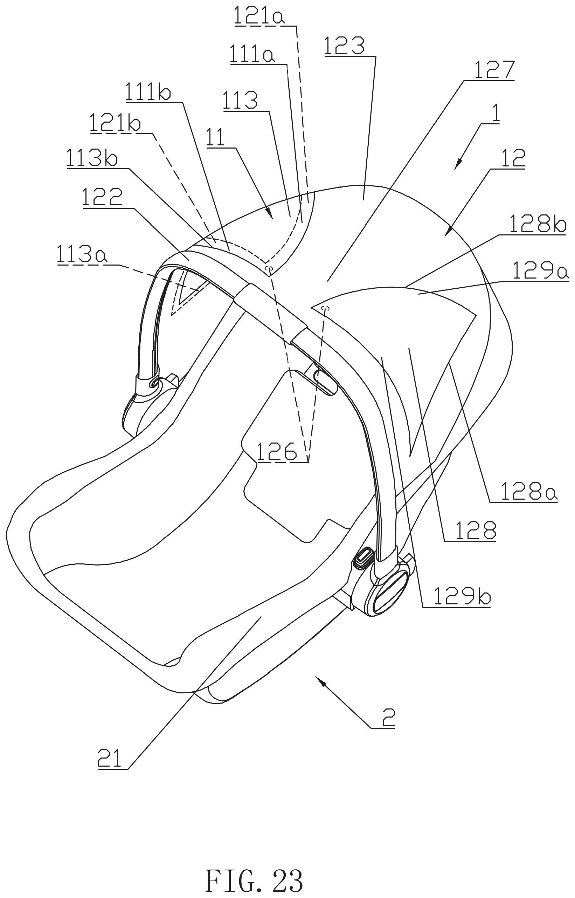

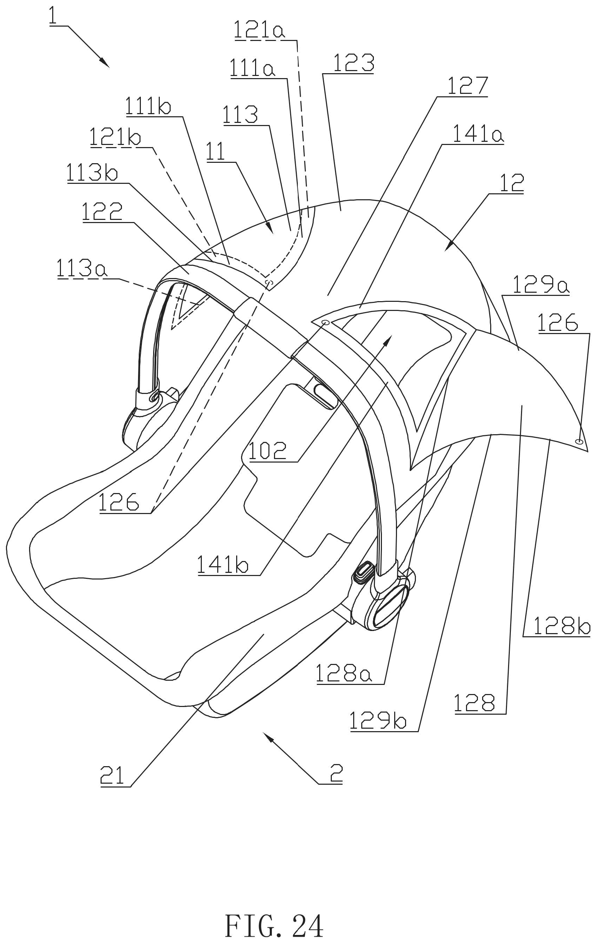

Referring to FIGs. 23 and 24, FIGs. 23 and 24 illustrate another embodiment of the present application. The canopy mechanism 1 according to the present embodiment is similar to the canopy mechanism 1 according to the embodiment shown in FIGs. 8 and 9, and only differences therebetween are described below.

In the present embodiment, the first end of the main body 127 is the first end of the second cover 123, and the first end of the second cover 123 is connected to the second pivoting member 122. The third connection section 121a and the fourth connection section 121b are disposed on the second cover 123. When the canopy mechanism 1 is in the unfolded state, the first connection section 111a is separated from the third connection section 121a, and the second connection section 111b is separated from the fourth connection section 121b, thereby allowing the first cover 113 to be switched from the first cover state to the first exposure state, so as to form the first opening on the canopy mechanism 1. Similarly, the seventh connection section 141a and the eighth connection section 141b are disposed on the second cover 123. When the canopy mechanism 1 is in the unfolded state, the fifth connection section 129a is separated from the seventh connection section 141a, and the sixth connection section 129b is separated from the eighth connection section 141b, thereby allowing the movable portion 128 to be switched from the second cover state to the second exposure state, so as to form the second opening 102 on the canopy mechanism 1. In the present embodiment, the first opening 101 and/or the second opening 102 may be freely formed on the canopy mechanism 1 depending on the requirements of the caregiver. In the canopy mechanism 1 provided according to the present embodiment, a user can touch the object in the carrier 2 or interact with the child or the pet in the carrier 2 just by pulling apart the first cover 113 or the movable portion 128. Therefore, the usage is convenient, and the operation is convenient.

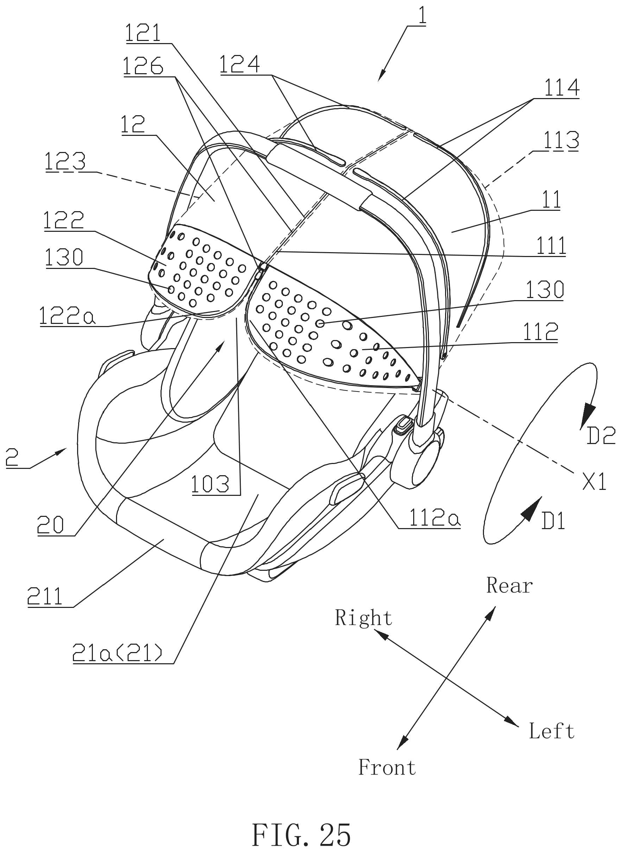

FIGs. 25 to 33 illustrate another embodiment of the present application. The canopy mechanism 1 according to the present embodiment is similar to the canopy mechanism 1 according to the embodiment shown in FIGs. 1 to 7, and only differences therebetween are described below.

Referring to FIG. 25, in the present embodiment, the first pivoting member 112 and the second pivoting member 122 are set to be plate-shaped. For example, the first pivoting member 112 is set to be a first pivoting plate, and the second pivoting member 122 is set to be a second pivoting plate. Optionally, the first pivoting plate and/or the second pivoting plate is provided with a through hole 130, the through hole 130 is used for ventilation and heat dissipation, and reducing the self-weight of the first pivoting plate and/or the second pivoting plate. Optionally, the first pivoting plate and/or the second pivoting plate is made of a PE plate or other hard plates. Optionally, an end portion of the first pivoting plate adjacent to the second pivoting plate is provided with a first bent portion 112a. The first bent portion 112a is bent towards a direction facing away from the first end of the first cover object 113. Similarly, an end portion of the second pivoting plate adjacent to the first pivoting plate is provided with a second bent portion 122a. The second bent portion 122a is bent towards a direction facing away from the first end of the second cover 123. The first bent portion 112a and the second bent portion 122a form an avoidance portion 103 on the edge of the opening 20 of the canopy mechanism 1, which may provide an avoidance space for the zipper pull of the zipper assembly as an example, and may further provide a good esthetic appearance for the opening 20 of the canopy mechanism 1.

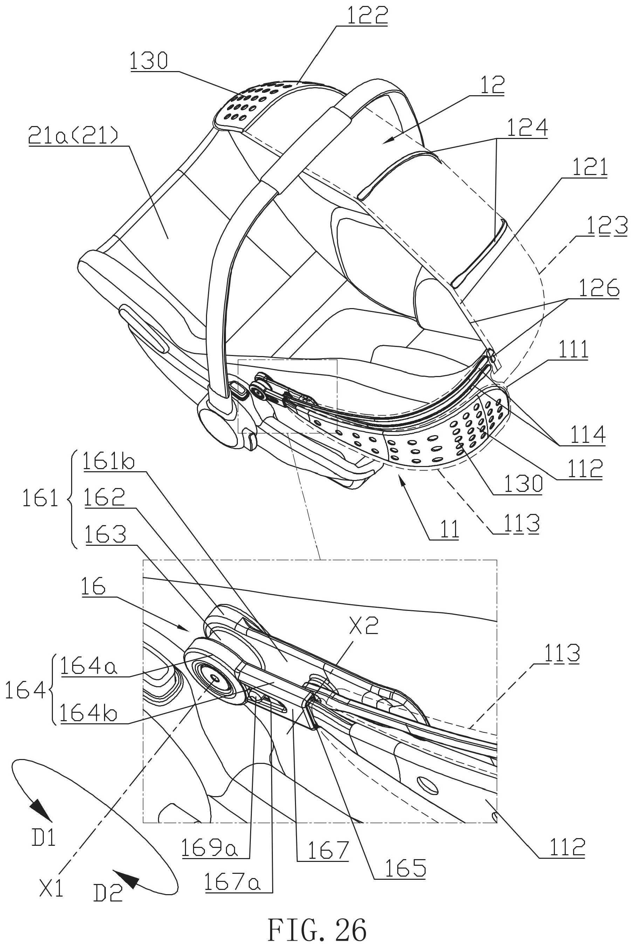

Referring to FIGs. 26 to 29b, in the present embodiment, the carrier 2 includes a canopy mechanism 1 and a carrier body 21. The canopy mechanism 1 includes pivoting joints 16, and the first portion 11 and the second portion 12 are pivotably connected to the carrier body 21 by one pivoting joint 16, respectively. The pivoting joint 16 connected with the first portion 11 is taken as an example for description below. The pivoting joint 16 includes, for example, a positioning member 161, which is detachably connected to the carrier body 21; and a rotating member 164, which is pivotably connected to the positioning member 161 and further connected with the first pivoting member 112. The positioning member 161 includes an engagement portion 162 and a first pivoting portion 163, which are disposed adjacent to each other in the direction parallel to the first pivot axis X1 and are connected with each other. Optionally, the engagement portion 162 and the first pivoting portion 163 are set to be an integrated structure. The engagement portion 162 is, for example, detachably connected to the carrier body 21. The rotating member 164 includes a rotating portion 164a and a mounting portion 164b, which are connected with each other. Optionally, the rotating portion 164a and the mounting portion 164b are set to be an integrated structure. The rotating portion 164a is pivotably connected to the first pivoting portion 163, so that the rotating member 164 is capable of pivoting relative to the positioning member 161 around the first pivot axis X1. The mounting portion 164b is connected to the first pivoting member 112, for example, the first pivoting plate.

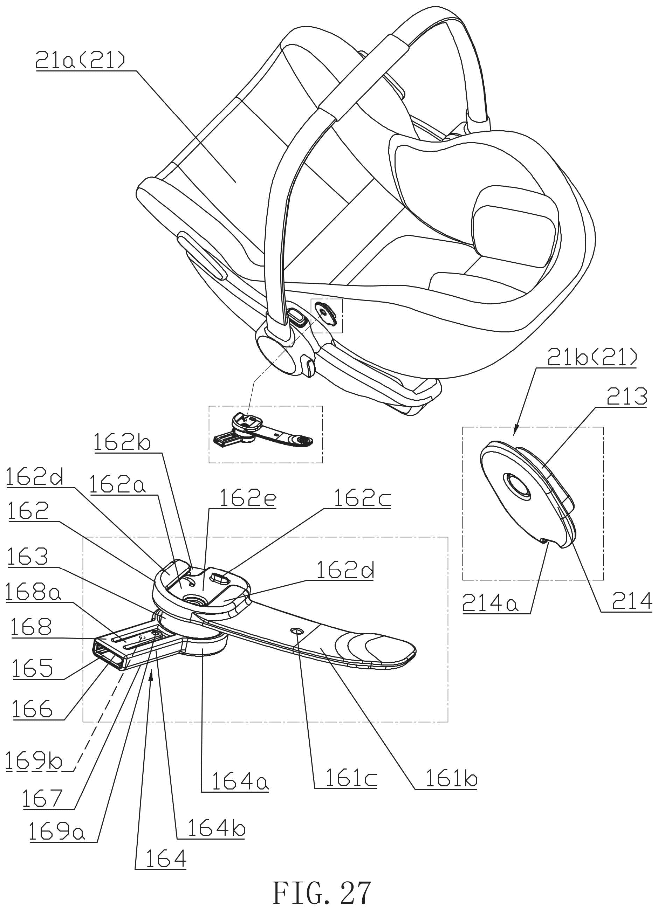

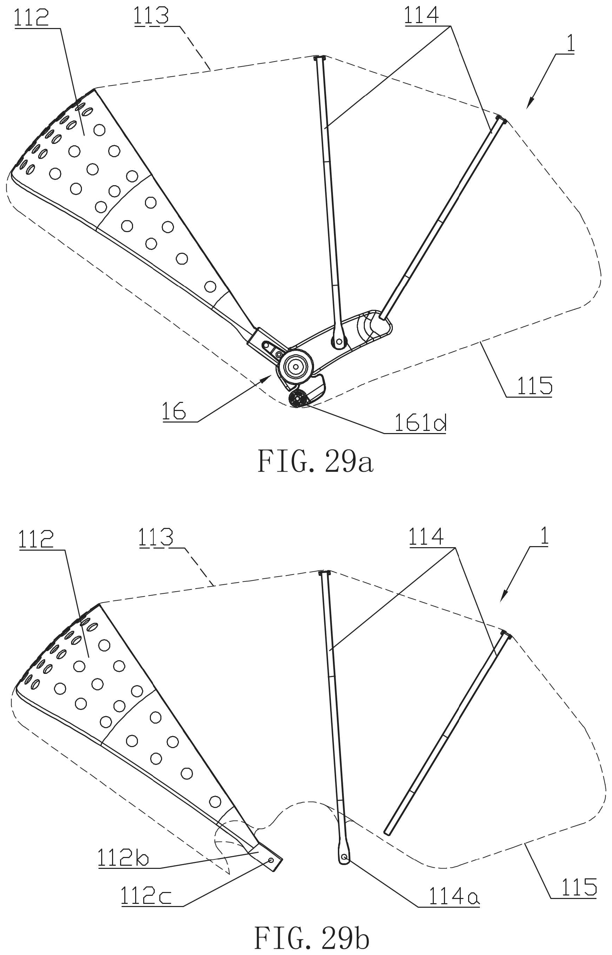

As shown in FIGs. 27 and 29b, the mounting portion 164b is set to be a hollow structure, a first end of the mounting portion 164b is connected with the rotating portion 164a, and the mounting portion 164b extends from the first end towards a direction facing away from the rotating portion 164a. The mounting portion 164b has a first wall 167 and a second wall 168 opposite to each other in the transverse direction of the carrier 2, and a mounting cavity 166 is formed between the first wall 167 and the second wall 168. A second end of the mounting portion 164b that is opposite to the first end is provided with a mounting opening 165 in communication with the mounting cavity 166. An end portion of the first pivoting member 112 is provided with a plug-in connection portion 112b, and the plug-in connection portion 112b may pass through the mounting opening 165 to be inserted into the mounting cavity 166, so that the first pivoting member 112 is connected to the rotating member 164. Optionally, a portion of the second wall 168 extends from the second end of the mounting portion 164b towards the first end of the mounting portion 164b to form an elastic arm 168a, the elastic arm 168a is provided with a free end, and the free end is disposed close to the first end of the mounting portion 164b. The elastic arm 168a is provided with a mounting protrusion 169b extending towards the first wall 167. Optionally, an extension height of the mounting protrusion 169b towards the first wall 167 is less than a distance between the first wall 167 and the second wall 168. The plug-in connection portion 112b is provided with a mounting hole 112c (referring to FIG. 29b). When the plug-in connection portion 112b is inserted into the mounting cavity 166, the plug-in connection portion 112b first presses against the mounting protrusion 169b, so that the elastic arm 168a generates elastic deformation towards a direction away from the first wall 167, so as to allow the plug-in connection portion 112b to continue to be inserted into the mounting cavity 166; the plug-in connection portion 112b is continued to be inserted into the mounting cavity 166, and when the plug-in connection portion 112b is inserted such that the mounting hole 112c is aligned with the mounting protrusion 169b, the plug-in connection portion 112b no longer presses against the mounting protrusion 169b, and the elastic arm 168a recovers to the location before being pressed under the action of its own elastic restoring force, so that the mounting protrusion 169b enters the mounting hole 112c. So far, the movement of the plug-in connection portion 112b in the mounting cavity 166 is limited, and the plug-in connection portion 112b cannot be further inserted into the mounting cavity 166, nor can it be withdrawn from the mounting cavity 166, so that the plug-in connection portion 112b is fixed in the mounting portion 164b, thereby realizing the connection between the first pivoting member 112 and the rotating member 164. Optionally, the first wall 167 is provided with an operation opening 167a, the end of the elastic arm 168a that is close to the first end of the mounting portion 164b is provided with an operation protrusion 169a, and the operation protrusion 169a extends towards the first wall 167. It can be seen that the operation protrusion 169a is disposed closer to the free end of the elastic arm 168a compared to the mounting protrusion 169b. Optionally, an extension height of the operation protrusion 169a towards the first wall 167 is set such that the operation protrusion 169a protrudes from the operation opening 167a, and thus the caregiver can conveniently press the operation protrusion 169a. Optionally, the extension height of the mounting protrusion 169b towards the first wall 167 is set such that the mounting protrusion 169b does not protrude from the operation opening 167a, such a design is conducive to improving the connection stability between the plug-in connection portion 112b and the mounting portion 164b on the one hand, and may further prevent accidental disengagement of the mounting protrusion 169b from the mounting hole 112c due to accidental pressing of the mounting protrusion 169b on the other hand. When the first pivoting member 112 is connected with the rotating member 164, the mounting protrusion 169b is located in the mounting hole 112c, at this time, the caregiver presses the operation protrusion 169a outside the operating port 167 to drive the elastic arm 168a to generate elastic deformation towards the direction away from the first wall 167, so that the mounting protrusion 169b is disengaged from the mounting hole 112c, so as to allow the plug-in connection portion 112b to move in the mounting cavity 166, that is, the plug-in connection portion 112b is allowed to exit from the mounting cavity 166, so as to detach the first pivoting member 112 from the rotating member 164.

Referring to FIGs. 26, 27 and 29b, in the present embodiment, the carrier body 21 includes a main body portion 21a and a limiting member 21b disposed on a side of the main body portion 21a, and the limiting member 21b is engaged (e.g., clamped) by the engagement portion 162, so that the positioning member 161 is detachably connected to the carrier body 21. As shown in FIG. 27, the limiting member 21b includes a base portion 213 fixedly connected to the main body portion 21a, and an engagement flange 214 disposed at the end of the base portion 213 that is away from the main body portion 21a. In a direction perpendicular to the first pivot axis X1, the engagement flange 214 protrudes from the base portion 213, that is, the engagement flange 214 and the base portion 213 form an umbrella-like structure. The engagement portion 162 is provided with a hollow inner cavity, a lower end of the engagement portion 162 is provided with an engagement opening 162b, thus the hollow inner cavity of the engagement portion 162 forms an engagement groove 162a, and the engagement opening 162b is in communication with the engagement groove 162a, that is, the engagement opening 162b is a notch of the engagement groove 162a. As shown in FIG. 27, a cavity wall of the hollow inner cavity of the engagement portion 162 is a groove wall of the engagement groove 162a. The engagement flange 214 may pass through the engagement opening 162b to be engaged (e.g., clamped) into the engagement groove 162a, so that the positioning member 161 is connected to the limiting member 21b and is thus connected to the carrier body 21. Optionally, the groove wall of the engagement groove 162a that is away from the first pivoting portion 163 is an engagement wall 162d, the engagement groove 162a is provided with a through opening 162e passing through the engagement wall 162d along the first pivot axis X1, and when the engagement flange 214 is engaged in the engagement groove 162a, the base portion 213 is accommodated in the through opening 162e.

With continued reference to FIG. 27, in the present embodiment, a locking protrusion 162c is disposed on the groove wall of the engagement groove 162a that is close to the first pivoting portion 163 (i.e., the groove wall of the engagement groove 162a that is opposite to the engagement wall 162d), and the locking protrusion 162c is disposed close to the engagement opening 162b. A lower end portion of the engagement flange 214 is provided with a locking recess 214a. When the engagement flange 214 is engaged to the engagement groove 162a, the locking protrusion 162c is engaged with the locking recess 214a, so as to limit the engagement portion 162 from moving towards a direction in which the engagement groove 162a is disengaged from the engagement flange 214. In other words, when the engagement flange 214 is engaged to the engagement groove 162a, the groove wall of the engagement groove 162a and the locking protrusion 162c jointly limit the movement of the engagement portion 162 relative to the engagement flange 214 (i.e., the limiting member 21b), so as to fixedly connect the positioning member 161 to the limiting member 21b.

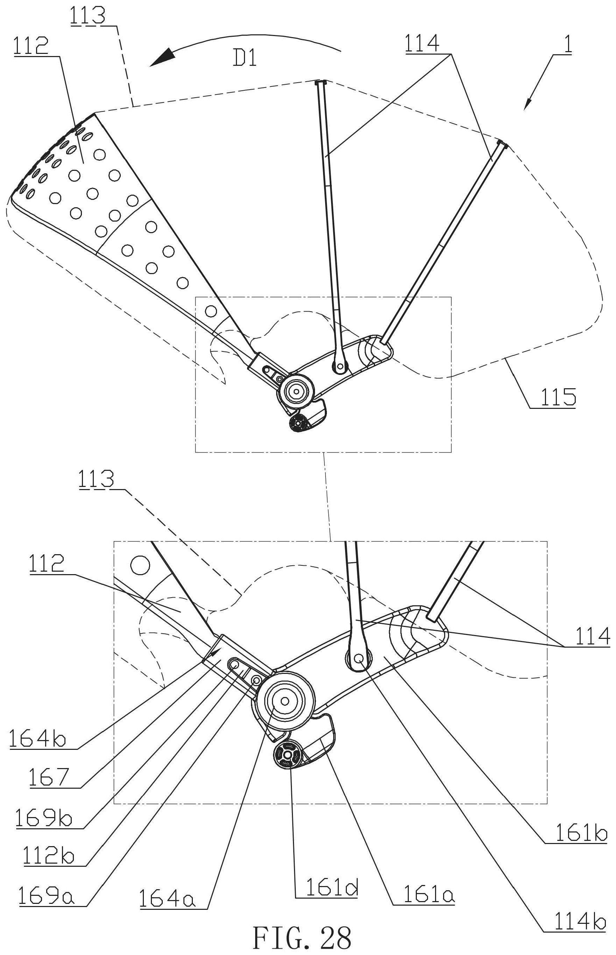

Referring to FIGs. 28 and 29a, in the present embodiment, the positioning member 161 further includes an unlocking portion 161a, and the unlocking portion 161a is connected to the engagement portion 162 or is set to be an integrated structure with the engagement portion 162. Optionally, the unlocking portion 161a is formed by extending the groove wall of the engagement groove 162a that is provided with the locking protrusion 162c. When the locking protrusion 162c is engaged in the locking recess 214a, the caregiver may drive the unlocking portion 161a to generate elastic deformation towards a direction away from the limiting member 21b, so that the locking protrusion 162c is disengaged from the locking recess 214a, so as to allow the engagement portion 162 to move towards the direction in which the engagement groove 162a is disengaged from the engagement flange 214. In other words, the engagement flange 214 is allowed to pass through the engagement opening 162b to disengage from the engagement groove 162a. Optionally, the positioning member 161 further includes a maintaining portion 161d. The maintaining portion 161d is connected to the unlocking portion 161a or is set to be an integrated structure with the unlocking portion 161a. The maintaining portion 161d may be provided with a maintaining member (not shown), and the maintaining member is connected to the first cover 113 covering the pivoting joint 16, so that the first cover 113 remains covering the pivoting joint 16. Optionally, the first cover 113 is provided with another maintaining member (not shown) cooperating with the maintaining member. Optionally, the maintaining member and the other maintaining member may be two racks in a zipper assembly, two sticking strips in a Velcro assembly, a hole and a buckle portion of a button assembly, two buckle portions of a buckle latch assembly, two buckle portions of a magnetic buckle assembly, etc.

Referring to FIGs. 27 to 29b, in the present embodiment, the positioning member 161 further includes an extension portion 161b, a first end of the extension portion 161b is connected with the engagement portion 162, and the extension portion 161b extends from the first end towards a direction facing away from the engagement portion 162. The extension portion 161b is provided with a second pivoting portion 161c, an end portion of the first supporting member 114 is pivotably connected to the second pivoting portion 161c for pivoting around a second pivot axis X2, and the second pivot axis X2 is parallel to the first pivot axis X1. In the present embodiment, the first supporting member 114 is pivotably connected with the positioning member 161, and compared with the solution in which the first supporting member 114 is not pivotably connected with the positioning member 161, the pivotable connection between the first supporting member 114 and the positioning member 161 may prevent the first cover 113 from softening under the gravity of the first supporting member 114 and the first cover 113, so that the first cover 113 is more upright as a whole. Optionally, the second pivoting portion 161c is set to be a first pivoting hole, an end portion of the first supporting member 114 is provided with a second pivoting hole 114a, and a pivoting shaft 114b passes through the first pivoting hole and the second pivoting hole 114a, so that the end portion of the first supporting member 114 is pivotably connected to the extension portion 161b. Referring to FIG. 28, in the present embodiment, the first portion 11 is provided with two first supporting members 114. When the canopy mechanism 1 is in the unfolded state, in the two first supporting members 114, the end portion of the first supporting member 114 closer to the first pivoting member 112 in the first direction D1 is pivotably connected to the extension portion 161b. Optionally, the extension portion 161b is further provided with a third pivoting portion (not shown), and the end portion of the first supporting member 114 farther away from the first pivoting member 112 in the first direction D1 is pivotably connected to the third pivoting portion.

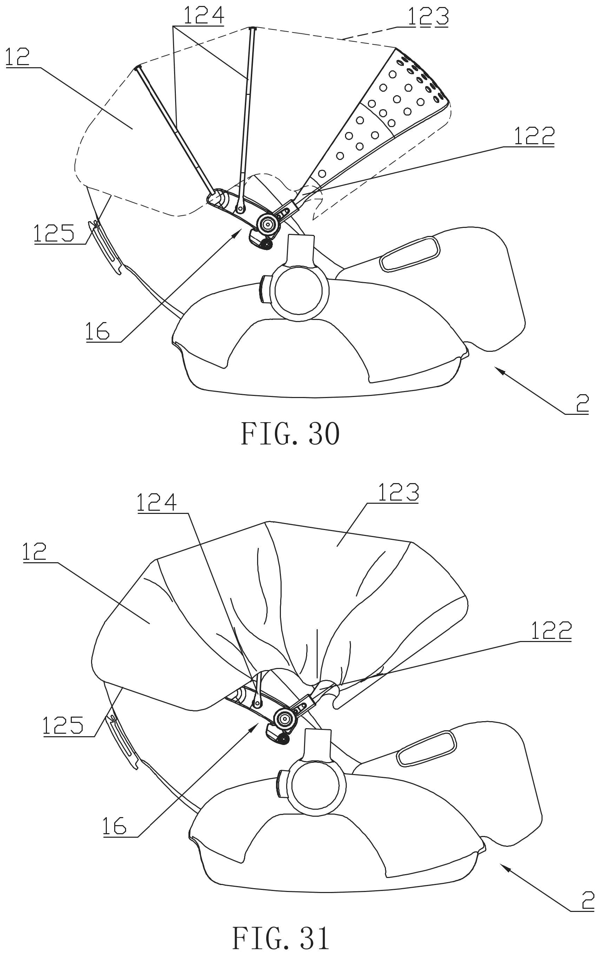

Referring to FIGs. 30 and 31, optionally, the second portion 12 is also pivotably connected to the carrier body 21 by a pivoting joint 16. An end portion of the second pivoting member 122 is provided with a plug-in connection portion (not shown), and the plug-in connection portion may pass through the mounting opening 165 to be inserted into the mounting cavity 166, so that the second pivoting member 122 is connected to the rotating member 164. The plug-in connection portion has the same structure as the plug-in connection portion 112b of the first pivoting member 112. An end portion of the second supporting member 124 is pivotably connected to the second pivoting portion 161c for pivoting around the second pivot axis X2. Regarding the connection manner between the end portion of the second supporting member 124 and the second pivoting portion 161c, reference may be made to the connection manner between the end portion of the first supporting member 114 and the second pivoting portion 161c described above for understanding, and details are not repeatedly described herein again.

Referring to FIGs. 28 and 30, optionally, connection mechanisms, such as elastic rings, are disposed in the first fixed portion 115 and the second fixed portion 125 in the penetration manner, so as to connect the first fixed portion 115 and the second fixed portion 125 to the rear end of the carrier body 21 of the carrier 2.

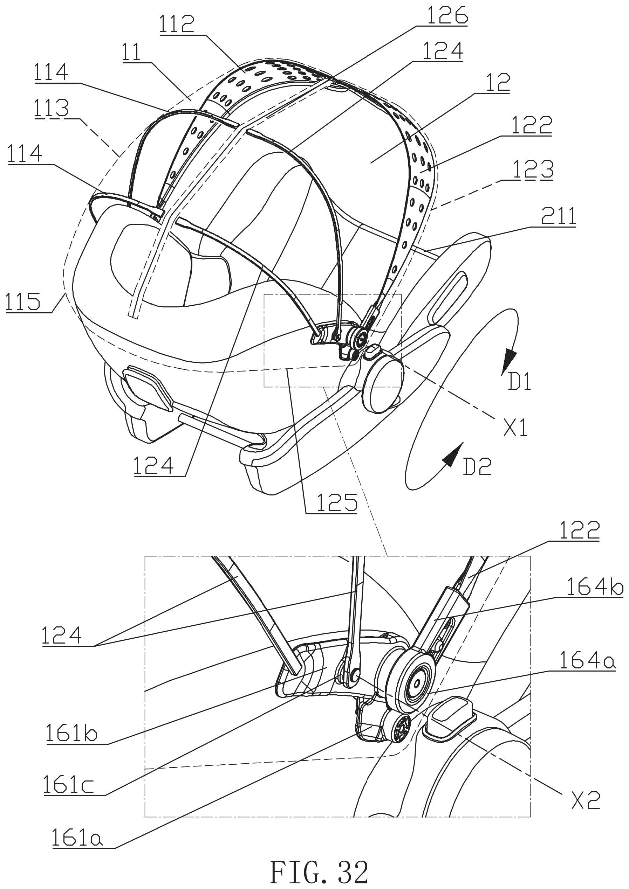

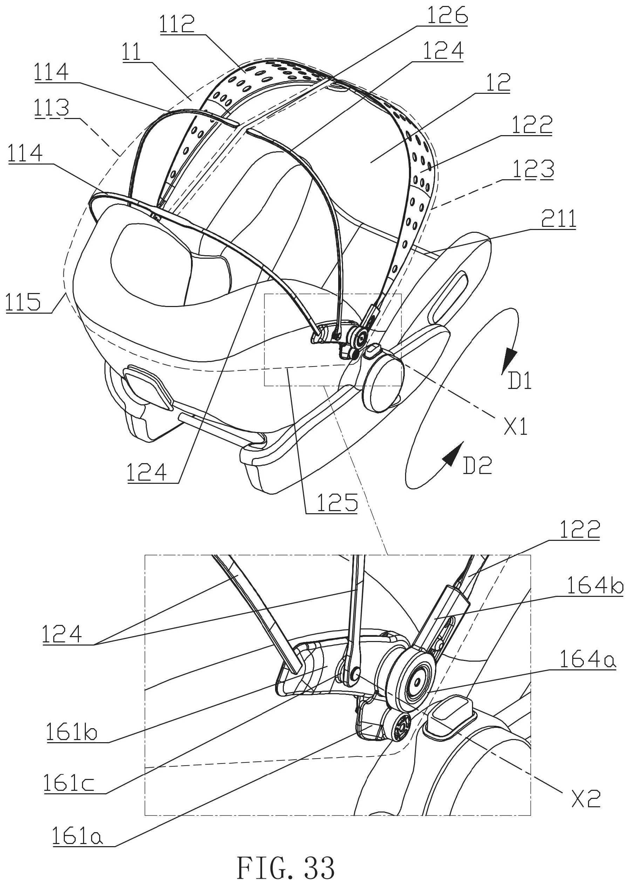

Referring to FIGs. 32 and 33 for comparison, in the embodiment shown in FIG. 32, when the canopy mechanism 1 is in the unfolded state, the first supporting member 114 and the second supporting member 124, which are aligned with each other in the transverse direction of the carrier 2, are separated by a zipper rack of the connection assembly 126, which is a zipper assembly as an example. In the embodiment shown in FIG. 33, when the canopy mechanism 1 is in the unfolded state, the first supporting member 114 and the second supporting member 124, which are closer to the rear end of the carrier body 21 of the carrier 2 in the second direction D2, are of an integrated structure, an end portion of the zipper rack of the connection assembly 126, which is the zipper assembly as an example, is approximately located on the side of the first supporting member 114 and the second supporting member 124 of the integrated structure that faces a front end 211 of the carrier body 21, and meanwhile, the first cover 113 and the second cover 123 located on the first supporting member 114 and the second supporting member 124 of the integrated structure and the first cover 113 and the second cover 123 located on the side of the first supporting member 114 and the second supporting member 124 of the integrated structure that is away from the front end 211 of the carrier body 21 continuously extend. The first supporting member 114 and the second supporting member 124 of the integrated structure not only facilitate the penetration of the first cover 113 and the second cover 123 that extend continuously, but also enable the first cover 113 and the second cover 123 that extend continuously to be more upright.

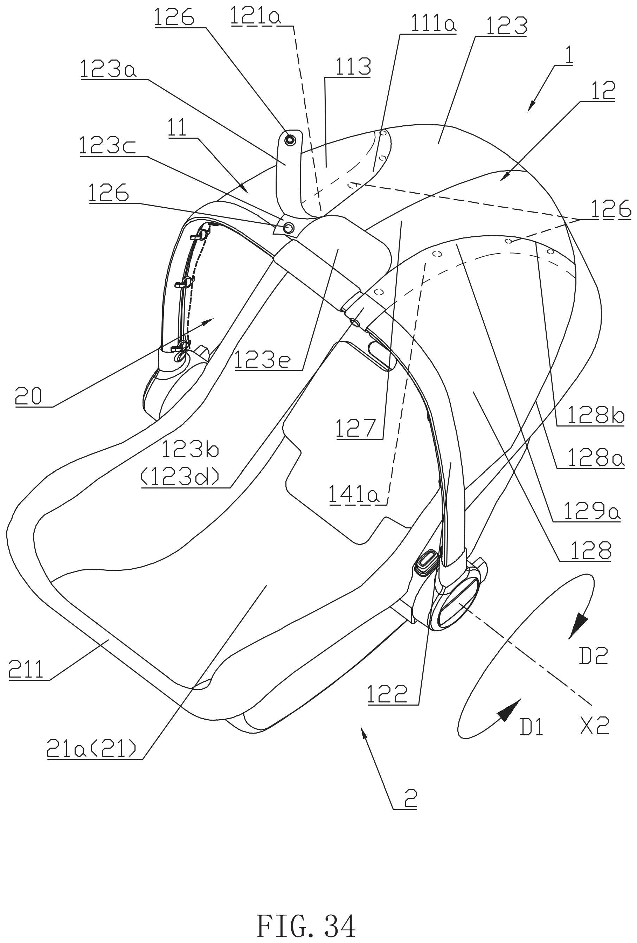

FIGs. 34 to 37 illustrate another embodiment of the present application. The canopy mechanism 1 according to the present embodiment is similar to the canopy mechanism 1 according to the embodiment shown in FIGs. 8 and 9, and only differences therebetween are described below.

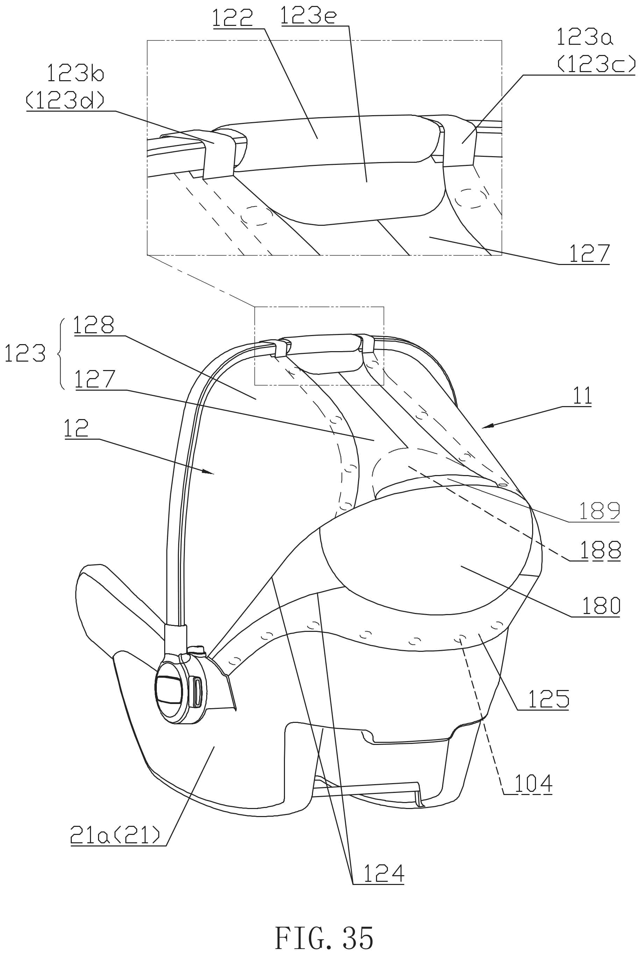

Referring to FIGs. 34 and 35, the first end of the second cover 123 is provided with a connection band, and the connection band is detachably connected to the second pivoting member 122, so that the first end of the second cover 123 is detachably connected to the second pivoting member 122. Optionally, the connection band is disposed at the first end of the main body 127. Optionally, the end portion of the third connection section 121a that is close to the second pivoting member 122 and the end portion of the seventh connection section 141a that is close to the second pivoting member 122 are respectively provided with a first connection band 123a and a second connection band 123b, and the first connection band 123a and the second connection band 123b are respectively provided with connection assemblies 126. For example, the connection assembly 126 may be a buckle latch assembly. For the first connection band 123a, one buckle portion of the buckle latch assembly is disposed at a free end of the first connection band 123a, and another buckle portion of the buckle latch assembly is disposed on the portion of the first connection band 123a that is close to the third connection section 121a or on the second pivoting member 122. The first connection band 123a is first intertwined on the second pivoting member 122, and then the two buckle portions of the buckle latch assembly are buckled, so that the first connection band 123a remains in the intertwined state around the second pivoting member 122, and thus the first connection band 123a is detachably connected to the second pivoting member 122. Similarly, for the second connection band 123b, one buckle portion of the buckle latch assembly is disposed at a free end of the second connection band 123b, and another buckle portion of the buckle latch assembly is disposed on the portion of the second connection band 123b that is close to the seventh connection section 141a or on the second pivoting member 122. The second connection band 123b is first intertwined on the second pivoting member 122, and then the two buckle portions of the buckle latch assembly are buckled, so that the second connection band 123b remains the intertwined state around the second pivoting member 122, and thus the second connection band 123b is detachably connected to the second pivoting member 122. In this way, the first end of the second cover 123 is detachably connected to the second pivoting member 122. Optionally, as shown in FIG. 34, the end portion of the third connection section 121a that is close to the second pivoting member 122 is provided with a first connection band 123a and a third connection band 123c, the length of the third connection band 123c is less than that of the first connection band 123a, the first connection band 123a and the third connection band 123c are respectively provided with one connecting member in the connection assembly 126, for example, respectively provided with two buckle portions of the buckle latch assembly. The first connection band 123a is intertwined on the second pivoting member 122, and the first connection band 123a and the third connection band 123c are connected by buckling the two buckle portions of the buckle latch assembly, so that the first connection band 123a remains in the intertwined state around the second pivoting member 122. Similarly, an end portion of the seventh connection section 141a is provided with a second connection band 123b and a fourth connection band 123d, the length of the fourth connection band 123d is less than that of the second connection band 123b, the second connection band 123b and the fourth connection band 123d are respectively provided with one connecting member in the connection assembly 126, for example, respectively provided with two buckle portions of the buckle latch assembly. The second connection band 123b is intertwined on the second pivoting member 122, and the second connection band 123b and the fourth connection strap 123d are connected by buckling the two buckle portions of the buckle latch assembly, so that the second connection band 123b remains in the intertwined state around the second pivoting member 122. Optionally, the connection assembly 126 may further be two sticking strips of a Velcro assembly, a hole and a buckle portion of a button assembly, two buckle portions of a magnetic buckle assembly, etc. Optionally, the portion of the edge of the first end of the second cover 123 that is located between the first connection band 123a and the second connection band 123b is a certain distance away from the second pivoting member 122, so as to form an avoidance opening 123e. The avoidance opening 123e is intended to enable the caregiver to conveniently hold the second pivoting member 122.

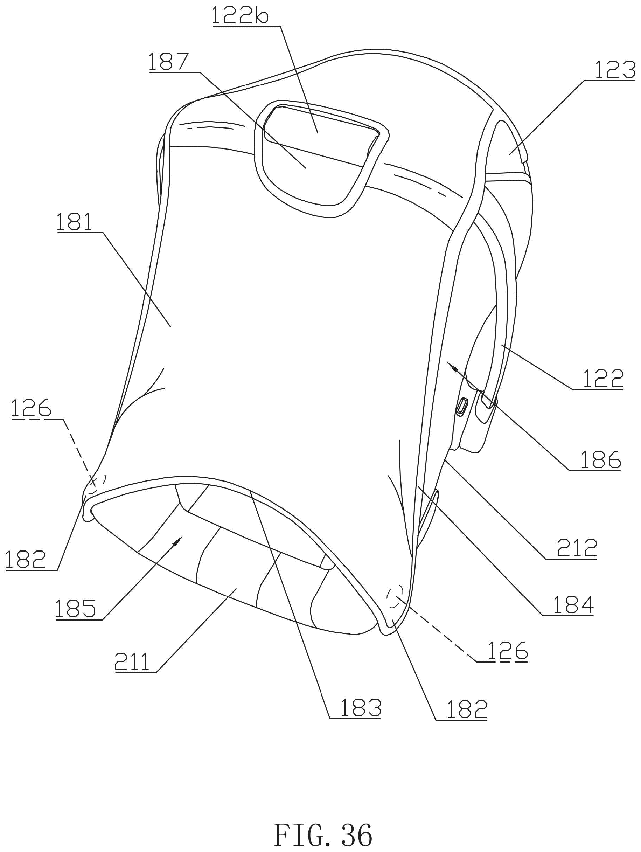

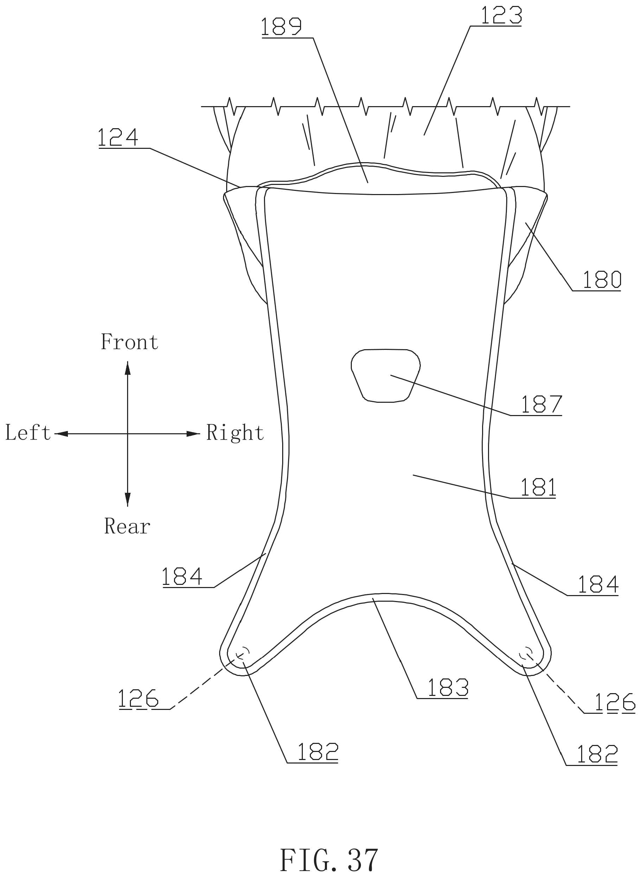

Referring to FIGs. 36 to 37, in the present embodiment, the canopy mechanism 1 further includes a third cover 181, optionally, the third cover 181 serves as sunshade fabric blind of the carrier 2 and may cover at least a portion of the opening 20 formed by the side of the second pivoting member 122 that faces the front end 211 of the carrier body 21, so as to provide protection for the child, the pet or the object in the carrier 2, for example, shading from the sun and sheltering from wind and rain, etc. As shown in FIGs. 36 and 37, a first end of the third cover 181 is connected to the second portion 12, and a second end of the third cover 181 is detachably connected to the front end 211 of the carrier body 21. When the canopy mechanism 1 is in the unfolded state, and the second end of the third cover 181 is connected to the front end 211 of the carrier body 21, the third cover 181 is unfolded and at least partially covers the opening 20. Optionally, the first end of the third cover 181 is connected to a portion between the first end of the second cover 123 and the second end of the second cover 123. Optionally, the first end of the third cover 181 is connected to a location on the second cover 123 that corresponds to the side of the second supporting member 124 close to the second pivoting member 122. Optionally, when the canopy mechanism 1 is in the unfolded state and the second end of the third cover 181 is connected to the front end 211 of the carrier body 21, the third cover 181 is unfolded and at least partially covers the second cover 123 and the second pivoting member 122 of the second portion 12.

Optionally, referring to FIG. 36, two corners 182 of the second end of the third cover 181 are detachably connected to two corners of the front end 211 of the carrier body 21 by, for example, connection assemblies 126. Optionally, the connection assemblies 126 may be two sticking strips of a Velcro assembly, a hole and a buckle portion of a button assembly, two buckle portions of a buckle latch assembly, two buckle portions of a magnetic buckle assembly, etc. For example, in the embodiment in which the connection assemblies 126 are two sticking strips of a Velcro assembly, one sticking strip is disposed on one corner 182, the other sticking strip is disposed on a corresponding corner of the front end 211 of the carrier body 21, therefore one corner 182 is connected to the corresponding corner of the front end 211 of the carrier body 21 by the cooperation of the two sticking strips. Regarding the connection between the other corner 182 of the second end of the third cover 181 and the other corner of the front end 211 of the carrier body 21, a connection assembly 126 of the same type as that of the aforementioned corner 182 may be employed, and a different kind of connection assembly 126 from the aforementioned corner 182 may also be employed. For example, for the other corner 182, the connection assemblies 126 are two buckle portions of a magnetic buckle assembly, one buckle portion is disposed on the other corner 182, and the other buckle portion is disposed on the other corresponding corner of the front end 211 of the carrier body 21, so that the other corner 182 is connected to the other corresponding corner of the front end 211 of the carrier body 21 by the cooperation of the two buckle portions. When the canopy mechanism 1 is in the unfolded state, and the second end of the third cover 181 is connected to the front end 211 of the carrier body 21, a front opening 185 is formed between an edge 183 of the second end of the third cover 181 and the front end 211 of the carrier body 21, so as to allow the sunlight to pass through the front opening 185 to irradiate the inner space of the carrier 2 while ensuring the air permeability of the inner space of the carrier 2, thereby ensuring the lighting requirements of the child, the pet or the object in the inner space of the carrier 2. Optionally, the front opening 185 is formed between the edge 183 of the second end of the third cover 181, which is located between the two corners 182, and the front end 211 of the carrier body 21. Optionally, when the canopy mechanism 1 is in the unfolded state, and the second end of the third cover 181 is connected to the front end 211 of the carrier body 21, a side opening 186 is formed among at least one edge 184 of the third cover 181 that is located between the first end of the third cover 181 and the second end of the third cover 181, a portion of the second pivoting member 122 and a portion of a side edge 212 of the carrier body 21. Optionally, the side opening 186 is formed among at least one edge 184 located between the first end of the third cover 181 and the portion of the third cover 181 above the second pivoting member 122, a portion of the second pivoting member 122 and a portion of the side edge 212 of the carrier body 21. The side opening 186 may implement a similar function as the front opening 185. Optionally, one side opening 186 is formed on both sides of the third cover 181 in the transverse direction of the carrier 2. Optionally, the third cover 181 is further provided with a top opening 187. When the canopy mechanism 1 is in the unfolded state, and the second end of the third cover 181 is connected to the front end 211 of the carrier body 21, the top opening 187 is located above a middle 122b of the second pivoting member 122, the middle 122b of the second pivoting member 122 is exposed from the top opening 187, and the top opening 187 at least partially overlaps with the avoidance opening 123e. The top opening 187 and the avoidance opening 123e are intended to enable the caregiver to conveniently pass through the top opening 187 of the third cover 181 and the avoidance opening 123e to hold the second pivoting member 122. Optionally, the third cover 181 is made of the same material as the second cover 123.

With continued reference to FIGs. 35 to 37, optionally, the second cover 123 is provided with a storage bag 188, the storage bag 188 is provided with a storage opening 189, the first end of the third cover 181 is fixed at a location in the storage bag 188 that is close to the storage opening 189, and the third cover 181 may be stored in the storage bag 188 via the storage opening 189 after being folded. After the third cover 181 is stored in the storage bag 188, the weight of the portion in the vicinity of the storage bag 188 of the second cover 123 increases. To avoid the collapse of the portion in the vicinity of the storage bag 188 of the second cover 123 towards the inner space of the carrier 2, optionally, the storage opening 189 is disposed in the vicinity of the second supporting member 124, and thus the second supporting member 124 may provide a support for the portion in the vicinity of the storage bag 188 of the second cover 123, so as to avoid the collapse of the portion in the vicinity of the storage bag 188 of the second cover 123 towards the inner space of the carrier 2. To conveniently store and take out the third cover 181, optionally, when the canopy mechanism 1 is in the unfolded state, the storage opening 189 faces the second pivoting member 122. Referring to FIGs. 35 and 37, in the present embodiment, the second cover 123 is provided with a covering member 180, and the covering member 180 is capable of moving between a covering location for covering the storage opening 189 and an exposure location for allowing the storage opening 189 to be exposed. Optionally, the covering member 180 is disposed at a location opposite to the storage opening 189. For example, as shown in FIG. 35, the storage opening 189 faces a direction facing away from the second pivoting member 122, one end of the covering member 180 is connected to the location of the second cover 123 that is closer to the second fixed portion 125 than the storage opening 189, when the covering member 180 is turned over to the covering location, the third cover 181 is blocked by the covering member 180 from sliding out of the storage opening 189, thereby more stably maintaining the third cover 181 in the storage bag 188.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present specification.

The above-described embodiments are only several implementations of the present application, and the descriptions are relatively specific and detailed, but they should not be construed as limiting the scope of the invention patent. It should be understood by those of ordinary skill in the art that various modifications and improvements can be made without departing from the concept of the present application, and all fall within the protection scope of the present application. Therefore, the patent protection of the present invention shall be defined by the appended claims.

## Claims

1. A canopy mechanism (1) for a carrier (2), **characterized by** comprising:
a first portion (11) provided with a first connection portion (111); and
a second portion (12) separably connected with the first connection portion (111),
when the first connection portion (111) is connected to the second portion (12), the canopy mechanism (1) is capable of pivoting around a first pivot axis (X1) between an unfolded state and a folded state;
when the canopy mechanism (1) is in the unfolded state, the first portion (11) and the second portion (12) are respectively in a first closed state and a second closed state; and
when the first portion (11) and the second portion (12) are respectively in the first closed state and the second closed state, and when at least a portion of the first connection portion (111) is separated from the second portion (12), the first portion (11) is switchable from the first closed state to a first open state, so as to form a first opening (101) on the canopy mechanism (1),
wherein the first portion (11) and the second portion (12) are disposed opposite to each other in a direction parallel to the first pivot axis (X1).

2. The canopy mechanism (1) of claim 1, wherein the first portion (11) comprises:
a first pivoting member (112) configured to pivot around the first pivot axis (X1) between a first closed position and a first open position;
a first fixed portion (115) connected to a carrier body (21) of the carrier (2); and
a first cover (113) extending between the first fixed portion (115) and the first pivoting member (112), the first connection portion (111) being disposed on the first cover (113);
when the first pivoting member (112) is at the first closed position, the first cover (113) is unfolded between the first fixed portion (115) and the first pivoting member (112), and the first portion (11) is in the first closed state; and
when the first pivoting member (112) is at the first open position, the first cover (113) is folded between the first fixed portion (115) and the first pivoting member (112), and the first portion (11) is in the first open state.

3. The canopy mechanism (1) of claim 2,
wherein the second portion (12) is provided with a second connection portion (121), and the second portion (12) comprises:
a second pivoting member (122) configured to pivot around the first pivot axis (X1) between a second closed position and a second open position;
a second fixed portion (125) connected to the carrier body (21) of the carrier (2); and
a second cover (123) extending between the second fixed portion (125) and the second pivoting member (122), the second connection portion (121) being disposed on the second cover (123), and the second connection portion (121) being separably connected with the first connection portion (111),
when the second pivoting member (122) is at the second closed position, the second cover (123) is unfolded between the second fixed portion (125) and the second pivoting member (122), and the second portion (12) is in the second closed state.

4. The canopy mechanism (1) of claim 3,
wherein when the first portion (11) and the second portion (12) are respectively in the first closed state and the second closed state, and when the first connection portion (111) is separated from the second connection portion (121), the second portion (12) is switchable from the second closed state to a second open state, so as to form a second opening (102) on the canopy mechanism (1); and
when the second pivoting member (122) is at the second open position, the second cover (123) is folded between the second fixed portion (125) and the second pivoting member (122), and the second portion (12) is in the second open state.

5. The canopy mechanism (1) of claim 2,
wherein the first pivoting member (112) is disposed at a first end of the first cover (113) in a penetration manner, a second end of the first cover (113) is connected to the first fixed portion (115), and the first connection portion (111) is disposed on an edge of the first cover (113) that is located between the first end of the first cover (113) and the second end of the first cover (113).

6. The canopy mechanism (1) of claim 3,
wherein the second pivoting member (122) is disposed at a first end of the second cover (123) in the penetration manner, a second end of the second cover (123) is connected to the second fixed portion (125), and the second connection portion (121) is disposed on an edge of the second cover (123) that is located between the first end of the second cover (123) and the second end of the second cover (123).

7. The canopy mechanism (1) of claim 3,
wherein an extension direction of the first connection portion (111) intersects with an extension direction of the first pivoting member (112), and an extension direction of the second connection portion (121) intersects with an extension direction of the second pivoting member (122).

8. The canopy mechanism (1) of claim 7,
wherein an end portion of the first pivoting member (112) is provided with a first bent portion (112a), and the first bent portion (112a) has a portion extending along the extension direction of the first connection portion (111); and/or
wherein an end portion of the second pivoting member (122) is provided with a second bent portion (122a), and the second bent portion (122a) has a portion extending along the extension direction of the second connection portion (121).

9. The canopy mechanism (1) of claim 2,
wherein the first portion (11) further comprises at least one first supporting member (114),
when the first portion (11) is in the first closed state, in a direction around the first pivot axis (X1), the first supporting member (114) is located between the first pivoting member (112) and the first fixed portion (115), and the first supporting member (114) supports the first cover (113).

10. The canopy mechanism (1) of claim 3,
wherein the second portion (12) further comprises at least one second supporting member (124),
when the second portion (12) is in the second closed state, in the direction around the first pivot axis (X1), the second supporting member (124) is located between the second pivoting member (122) and the second fixed portion (125), and the second supporting member (124) supports the second cover (123).

11. The canopy mechanism (1) of claim 3,
wherein when the first pivoting member (112) and the second pivoting member (122) are configured to be plate-shaped, the first pivoting member (112) and/or the second pivoting member (122) is provided with a through hole (130).

12. The canopy mechanism (1) of claim 2,
wherein the canopy mechanism (1) further includes a pivoting joint (16), the pivoting joint (16) includes: a positioning member (161) including an engagement portion (162) and a first pivoting portion (163) connected with each other, the engagement portion (162) being connected to the carrier body (21) of the carrier (2); and a rotating member (164) including a rotating portion (164a) and a mounting portion (164b), the rotating portion (164a) being pivotably connected to the first pivoting portion (163), so that the rotating member (164) is pivotable around the first pivot axis (X1), and the mounting portion (164b) is connected to the first pivoting member (112).

13. The canopy mechanism (1) of claim 12,
wherein the mounting portion (164b) is provided with a mounting opening (165), a mounting cavity (166) is disposed in the mounting portion (164b), the mounting opening (165) is in communication with the mounting cavity (166), the first pivoting member (112) is provided with a plug-in connection portion (112b), and the plug-in connection portion (112b) is inserted into the mounting cavity (166) via the mounting opening (165) to be connected to the mounting portion (164b).

14. The canopy mechanism (1) of claim 13,
wherein the mounting portion (164b) is provided with a first wall (167) and a second wall (168) opposite to each other, the first wall (167) is provided with an operation opening (167a), the second wall (168) is provided with an elastic arm (168a), the elastic arm (168a) is provided with an operation protrusion (169a), the operation protrusion (169a) extends towards the first wall (167) and protrudes from the operation opening (167a), the elastic arm (168a) is further provided with a mounting protrusion (169b), the mounting protrusion (169b) extends towards the first wall (167), the mounting protrusion (169b) is disposed farther from a free end of the elastic arm (168a) compared to the operation protrusion (169a), the plug-in connection portion (112b) is provided with a mounting hole (112c), and when the plug-in connection portion (112b) is inserted into the mounting cavity (166), the mounting protrusion (169b) enters the mounting hole (112c).

15. The canopy mechanism (1) of claim 12,
wherein the positioning member (161) further includes an extension portion (161b), the extension portion (161b) is connected to the engagement portion (162), the extension portion (161b) is provided with a second pivoting portion (161c), the first portion (11) further includes a first supporting member (114), when the first portion (11) is in the first closed state, in the direction around the first pivot axis (X1), the first supporting member (114) is located between the first pivoting member (112) and the first fixed portion (115), and the first supporting member (114) supports the first cover (113), an end portion of the first supporting member (114) is pivotably connected to the second pivoting portion (161c), the first supporting member (114) is configured to be pivotable about a second pivot axis (X2), and the second pivot axis (X2) is parallel to the first pivot axis (X1).
